(19) Europäisches Patentamt
European Patent Office
Office européen des brevets

(11) EP 4 745 771 A1

(12) **EUROPEAN PATENT APPLICATION**
published in accordance with Art. 153(4) EPC

(43) Date of publication:
**20.05.2026 Bulletin 2026/21**

(21) Application number: **24847556.8**

(22) Date of filing: **29.02.2024**

(51) International Patent Classification (IPC):
***G06F 9/50*** *(2006.01)*

(52) Cooperative Patent Classification (CPC):
**G06F 9/50**

(86) International application number:
**PCT/CN2024/079353**

(87) International publication number:
**WO 2025/025589 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.07.2023 CN 202310952215**
**28.09.2023 CN 202311288295**

(71) Applicant: **Huawei Cloud Computing Technologies Co., Ltd.**
**Gui'an New District, Guizhou 550025 (CN)**

(72) Inventors:
- **GU, Jiongjiong**
  **Guiyang, Guizhou 550025 (CN)**
- **MING, Zhong**
  **Shenzhen, Guangdong 518060 (CN)**
- **CAO, Weipeng**
  **Guiyang, Guizhou 550025 (CN)**
- **CAI, Zhiyuan**
  **Guiyang, Guizhou 550025 (CN)**
- **QIU, Qijie**
  **Guiyang, Guizhou 550025 (CN)**

(74) Representative: **Gill Jennings & Every LLP**
**The Broadgate Tower**
**20 Primrose Street**
**London EC2A 2ES (GB)**

(54) **CROSS-RUNTIME INSTANCE HYBRID DEPLOYMENT METHOD AND APPARATUS BASED ON CLOUD COMPUTING TECHNOLOGY**

(57) This application discloses a method and an apparatus for hybrid deployment across runtime instances based on a cloud computing technology, and belongs to the field of cloud technologies. In this method, a resource scheduling system manages resources of a plurality of hybrid nodes. Because the hybrid node supports deployment of a plurality of types of runtime instances, the resource scheduling system can deploy different types of runtime instances on the hybrid node. Specifications of different types of runtime instances differ greatly, and fragmented resources of the hybrid node can be allocated to a runtime instance with a small specification, so that the fragmented resources of the hybrid node can be fully utilized.

Client
Resource scheduling system
501: Send an instance configuration request
502: Receive the instance configuration request
503: Determine a first hybrid node from a plurality of hybrid nodes based on the instance configuration request
504: Create a target instance for a tenant on the first hybrid node
505: Send running status information of the target instance
506: The client receives and displays the running status information

FIG. 5

EP 4 745 771 A1

## Description

This application claims priority to Chinese Patent Application No. 202310952215.2, filed on July 31, 2023 and entitled "TASK SCHEDULING SYSTEM AND METHOD FOR PROVIDING CLOUD SERVICE, AND COMPUTING DEVICE CLUSTER", which is incorporated herein by reference in its entirety.

This application claims priority to Chinese Patent Application No. 202311288295.2, filed on September 28, 2023 and entitled "METHOD AND APPARATUS FOR HYBRID DEPLOYMENT ACROSS RUNTIME INSTANCES BASED ON CLOUD COMPUTING TECHNOLOGY", which is incorporated herein by reference in its entirety.

## TECHNICAL FIELD

This application relates to the field of cloud technologies, and in particular, to a method and an apparatus for hybrid deployment across runtime instances based on a cloud computing technology.

## BACKGROUND

With the rapid rise of a 5th generation mobile communication technology (5th generation mobile communication technology, 5G) network and edge computing, enterprises raise higher requirements on multi-cloud management platform access, full-stack resource management, intelligent monitoring, operations, and maintenance, and the like. Currently, there are a plurality of types of cloud management platforms in the market. Different types of cloud management platforms are responsible for creating different types of runtime instances. For example, each cloud management platform creates a runtime instance on a node of the cloud management platform. Runtime types of runtime instances created on a same node are the same. In this case, specification parameters of the runtime instances on the same node are similar, and fragmented resources of the node cannot be allocated to more runtime instances for use. This causes low resource utilization of the node.

## SUMMARY

Embodiments of this application provide a method and an apparatus for hybrid deployment across runtime instances based on a cloud computing technology, so that fragmented resources of a node can be fully utilized. Technical solutions are as follows.

According to a first aspect, a method for hybrid deployment across runtime instances based on a cloud computing technology is provided. The method is performed by a resource scheduling system that is based on the cloud computing technology, the resource scheduling system is configured to manage resources of a plurality of hybrid nodes, the hybrid node is a node supporting at least two types of runtime instances, and the types of the runtime instances include a container, a virtual machine, and a serverless function. The method includes the following steps: first receiving an instance configuration request sent by a tenant through a client, where the instance configuration request indicates to deploy a target instance on the hybrid node, and a runtime type of the target instance is a type of the runtime instance; then determining a first hybrid node from the plurality of hybrid nodes based on the instance configuration request; then creating the target instance for the tenant on the first hybrid node; and then sending running status information of the target instance to the client, where the running status information includes an identifier of the runtime type and node information that are of the target instance, and the node information indicates that a runtime environment of the target instance is the first hybrid node.

In this method, the resource scheduling system manages the resources of the plurality of hybrid nodes. Because the hybrid node supports deployment of a plurality of types of runtime instances, the resource scheduling system can deploy different types of runtime instances on the hybrid node. Specifications of different types of runtime instances differ greatly, and fragmented resources of the hybrid node can be allocated to a runtime instance with a small specification, so that the fragmented resources of the hybrid node can be fully utilized.

In a possible implementation, after the creating the target instance for the tenant on the first hybrid node, the method further includes the following steps: obtaining instance priority information entered by the tenant, and adjusting, based on the instance priority information, resources occupied by the target instance on the first hybrid node, to meet a quality of service requirement of the target instance, where the instance priority information is used to determine quality of service required by the target instance on the first hybrid node.

Based on the foregoing possible implementation, the resources occupied by the target instance on the hybrid node are adjusted based on the instance priority information entered by the tenant, so that adjusted resources occupied by the target instance can meet the quality of service requirement of the target instance, to ensure quality of service of a service that is run in the target instance.

In a possible implementation, the resource scheduling system supports the tenant in updating the instance priority information based on running status information after the resource adjustment, and the method further includes the following step: adjusting, based on updated instance priority information, resources occupied by the target service instance.

Based on the foregoing possible implementation, this helps the tenant update the instance priority information, so that the resource adjustment system performs, based on the updated instance priority information, secondary adjustment on the resources occupied by the target instance, to meet service requirements of the target instance in different time periods.

In a possible implementation, the method further includes the following steps: in a process in which the target instance runs a target service of the tenant, obtaining node statuses of the plurality of hybrid nodes and a quality of service degradation parameter of each service instance running on each hybrid node; determining a resource adjustment policy of the target instance based on the node statuses of the plurality of hybrid nodes, the quality of service degradation parameter of each service instance, and an actual quantity of resources consumed by each service instance; and adjusting, according to the resource adjustment policy in the resources provided by the plurality of hybrid nodes, the resources occupied by the target instance, where the resource adjustment policy is capable of meeting the quality of service requirement of the target instance, the quality of service degradation parameter indicates a quality of service degradation degree of the service instance in a running process, and a runtime type of the service instance is a type of the runtime instance.

Based on the foregoing possible implementation, the resources occupied by the target instance on the hybrid node are adjusted according to the resource adjustment policy, so that adjusted resources occupied by the target instance can meet the quality of service requirement of the target instance, to ensure quality of service of a service that is run in the target instance.

In a possible implementation, the node status includes a resource status and a service status of the hybrid node, the resource status indicates at least one of a resource allocation status and a resource utilization status of the hybrid node, and the service status indicates at least one of a busy degree of the hybrid node and an affinity degree between the hybrid node and a local service instance.

In a possible implementation, the resource adjustment policy includes any one of the following:

releasing a first quantity of resources from the resources occupied by the target instance;
allocating a second quantity of resources to the target instance from unoccupied resources of the first hybrid node; and
allocating a third quantity of resources to the target instance from unoccupied resources of a second hybrid node in the plurality of hybrid nodes.

Based on the foregoing possible implementation, the resources occupied by the target instance are adjusted according to different resource adjustment policies, so that idle fragmented resources of the hybrid node can be integrated, thereby fully utilizing the fragmented resources of the hybrid node.

In a possible implementation, the resource adjustment policy includes recommended specification information, and the recommended specification information is information about a runtime specification that is recommended to the tenant and that is capable of meeting a quality of service requirement of the target service. Based on this, the method further includes the following steps: updating the running status information based on a quality of service degradation parameter of the target service and/or the recommended specification information; and sending updated running status information to the client.

Based on the foregoing possible implementation, this helps the tenant view a latest running status of the target instance.

In a possible implementation, a process of obtaining the quality of service degradation parameter of each service instance running on each hybrid node includes: determining the quality of service degradation parameter of the service instance based on kernel indicator data of a processor core bound to the service instance.

Based on the foregoing possible implementation, the kernel indicator data can accurately reflect a kernel-level resource consumed by a runtime instance on a CPU, so that a quality of service degradation situation of the target instance can be accurately predicted based on the kernel indicator data. In this way, when the quality of service degradation is severe, resource scheduling is performed on the target instance in a timely manner, to alleviate the quality of service degradation situation of the target instance as soon as possible.

According to a second aspect, an apparatus for hybrid deployment across runtime instances based on a cloud computing technology is provided, and is configured to perform the method provided in any one of the first aspect or the optional manners of the first aspect.

According to a third aspect, a computing device cluster is provided. The computing device cluster includes at least one computing device, and each computing device includes a processor and a storage. A processor of the at least one computing device is configured to execute instructions stored in a storage of the at least one computing device, to enable the computing device cluster to perform the method provided in any one of the first aspect or the optional manners of the first aspect.

According to a fourth aspect, a computer-readable storage medium is provided. The storage medium stores computer program instructions, and when the computer program instructions are run by a computing device cluster, the computing device cluster is enabled to perform the method provided in any one of the first aspect or the optional manners of the first aspect.

According to a fifth aspect, a computer program product or a computer program is provided. The computer program product or the computer program includes instructions. When the instructions are run by a computing cluster, the computing cluster is enabled to perform the method provided in the first aspect or the optional implementations of the first aspect.

Based on the implementations provided in the foregoing aspects, further combination may be performed in this application, to provide more implementations.

## BRIEF DESCRIPTION OF DRAWINGS

FIG. 1 is a diagram of an architecture of a resource scheduling system based on a cloud computing technology according to an embodiment of this application;
FIG. 2 is a diagram of interaction between a resource scheduling system and OpenStack according to an embodiment of this application;
FIG. 3 is a diagram of interaction between a resource scheduling system and Kubernetes according to an embodiment of this application;
FIG. 4 is a diagram of a global resource of a resource scheduling system according to an embodiment of this application;
FIG. 5 is a flowchart of a method for hybrid deployment across runtime instances based on a cloud computing technology according to an embodiment of this application;
FIG. 6 is a flowchart in which a resource scheduling system performs hybrid deployment on a runtime instance according to an embodiment of this application;
FIG. 7 is a flowchart of a resource scheduling method based on a cloud computing technology according to an embodiment of this application;
FIG. 8 is a diagram of a resource scheduling policy according to an embodiment of this application;
FIG. 9 is a diagram of a task display page according to an embodiment of this application;
FIG. 10 is a diagram of a structure of an apparatus for hybrid deployment across runtime instances based on a cloud computing technology according to an embodiment of this application;
FIG. 11 is a diagram of a structure of a computing device according to an embodiment of this application;
FIG. 12 is a diagram of an architecture of a computing cluster according to an embodiment of this application; and
FIG. 13 is a diagram of an architecture of another computing cluster according to an embodiment of this application.

## DESCRIPTION OF EMBODIMENTS

For ease of understanding implementations of this application, the following describes some terms in this application.

Node (node): is a device that has at least one of a data processing function and a data storage function. An operating system is run on the node, and nodes may be distinguished based on operating systems, that is, different operating systems are run on different nodes. In other words, hardware and software used for running an operating system may be considered as belonging to a same node. The node may be a complete physical machine, for example, a terminal, a network device, a server, or a server agent. The node may alternatively be a device in the physical machine, for example, a processor, a memory, or a storage. When one physical machine includes two nodes, different operating systems are run on the two nodes. For example, if the physical machine includes a central processing unit (central processing unit, CPU) running an operating system 1 and a graphics processing unit (graphics processing unit, GPU) running an operating system 2, the central processing unit and the graphics processing unit may be considered as belonging to different nodes. When the node is the device, the node is an independent entity in hardware. The "independent entity" may be understood as a circuit or module with a dedicated function, and the device is packaged or assembled on the physical machine. The physical machine is a computer that is packaged into a product, for example, a server, a desktop computer, an all-in-one machine, a notebook computer, or a smartphone.

Runtime (runtime) environment: is an environment provided for running a computer program. In other words, the runtime environment includes components such as a support library, a data structure, and a function that are needed during running of the computer program. The components provide a necessary infrastructure, so that the computer program can be run on a specific operating system and specific hardware. A type of the runtime environment is, for example, a virtual machine (virtual machine, VM), a container (container), a serverless function (function), a bare metal server, or a Linux process. The virtual machine is, for example, a kernel-based virtual machine (kernel-based virtual machine, KVM). The container is, for example, a Linux container, a docker container, or a Wasm container. In some embodiments, a runtime environment is also referred to as a runtime instance.

Unified scheduling (unified schedule): means transparently integrating different types of runtime instances and resources of different types of runtime instances, and providing unified task scheduling and resource management functions, to implement task scheduling across runtime instances.

Resource of the runtime instance: is a resource allocated to the runtime instance from at least one of a computing resource and a network resource of a node by using a virtualization technology. The computing resource includes, for example, a CPU resource and a memory resource. The network resource is, for example, bandwidth. The memory resource is, for example, memory space. A quantity of resources allocated to the runtime instance represents a specification of the runtime instance. Specifications of different runtime instances may be the same or different.

Service (task): is a computer program (for example, an application program) that is run in the runtime instance. At least one service can be run in a same runtime instance, and services that are run in the same runtime instance form a service set of the runtime instance.

Service scheduling: means scheduling services between different runtime instances of a same runtime type.

Instance scheduling: means scheduling runtime instances between different nodes. Runtime types of the runtime instances on the different nodes may be the same or different.

Flexible computing (flexible computing): is a resource allocation manner based on dynamic load matching, and aims to efficiently utilize underlying resources of the runtime instance. The flexible computing maximizes runtime resource utilization and optimizes resource allocation by changing a basis of the resource allocation from a static fixed specification to a dynamically changeable task load instance. Specifically, when it is ensured that quality of service (quality of service, QoS) of a task is not degraded, in the flexible computing, service load is used as a key factor for resource allocation, and a resource needed for service running is dynamically adjusted based on a real-time resource requirement of a service, to improve flexibility and a response speed of a system, and reduce a resource waste and energy consumption. The flexible computing can not only improve resource utilization, but also reduce costs for a tenant. This improves service efficiency and competitiveness.

CPU kernel load performance: is a kernel-level performance indicator of a CPU, and indicates CPU load. The kernel load performance includes at least one of the following of the CPU: a service clock (task-clock), a quantity of context switches (context-switches), a quantity of processor migrations (cpu-migrations), a quantity of page faults (page-faults), clock cycles (cycles), a quantity of instructions per clock cycle (instructions per cycle, IPC), a quantity of stalled cycles per instruction (stalled cycles per instruction), a quantity of branch predictions (branches), a quantity of branch prediction failures (branches-misses), a quantity of times of reading from a level 1 cache (L1-dcache-loads), a quantity of times of failing to read from the level 1 cache (L1-dcache-load-missed), a quantity of times of reading from a last level cache (last level cache loads, LLC-loads), and a quantity of times of failing to read from the last level cache (last level cache-loads-missed, LLC-load-misses).

task-clock: represents CPU time for a processor to execute a service, and a unit is millisecond (millisecond, ms).

context-switches: represents a quantity of context switches during service running.

cpu-migrations: represents a quantity of CPU migrations during service running. One CPU migration means that a service is migrated from one CPU to another CPU for running.

page-faults: represents a quantity of page faults that occur when a CPU accesses a memory during service running. A page fault means that for a to-be-accessed virtual address in virtual space, a CPU cannot find a mapping relationship between the virtual address and a physical memory through a memory management unit (memory management unit). When the page fault occurs, a processing function may be invoked through a CPU interrupt, to access the physical memory.

IPC: represents a quantity of instructions that can be completed by a CPU in one clock cycle. An IPC value is positively correlated with CPU performance. A higher IPC value indicates better CPU performance.

stalled cycles per instruction: represents a quantity of clock cycles stalled when a CPU completes each instruction. A value of stalled cycles per instruction is negatively correlated with CPU performance. A smaller value of stalled cycles per instruction indicates better CPU performance.

branches: represents a quantity of CPU branch predictions in a time period.

branches-misses: represents a quantity of CPU branch prediction failures in a time period. A value of branches-misses is negatively correlated with CPU performance. A smaller value of branches-misses indicates better CPU performance.

L1-dcache-loads: represents a quantity of times a CPU reads data from the level 1 cache in a time period.

L1-dcache-load-missed: represents a quantity of times a CPU fails to read data from the level 1 cache in a time period.

LLC-loads: represents a quantity of times a CPU reads data from the last level cache in a time period.

LLC-load-misses: represents a quantity of times a CPU fails to read data from the last level cache in a time period.

The following further describes implementations of this application in detail with reference to the accompanying drawings.

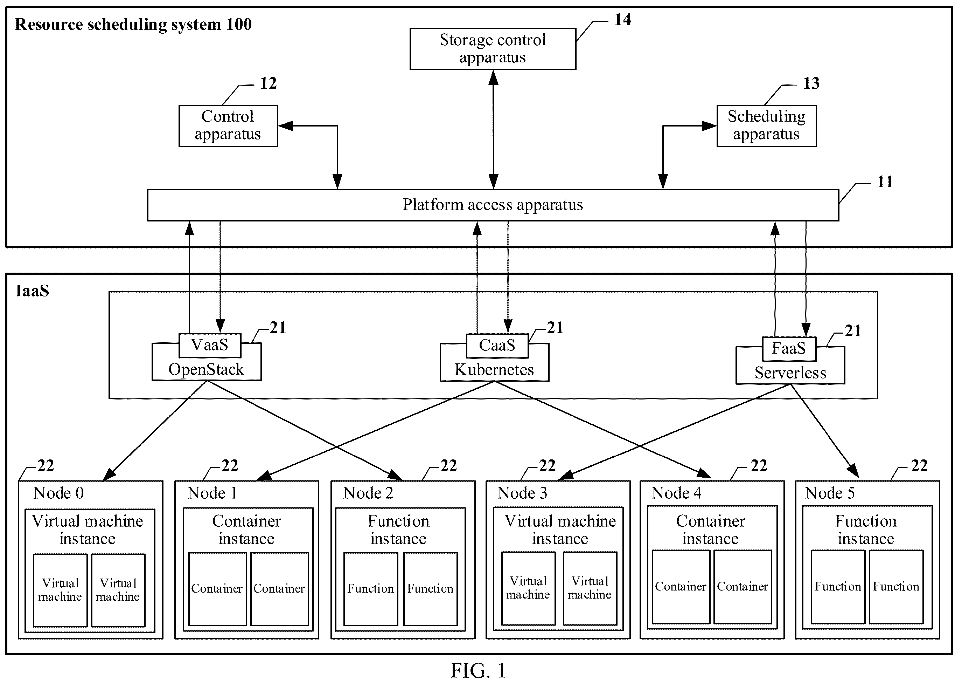

FIG. 1 is a diagram of an architecture of a resource scheduling system based on a cloud computing technology according to an embodiment of this application. Refer to FIG. 1. The resource scheduling system 100 includes a platform access apparatus 11, a control apparatus 12, a scheduling apparatus 13, and a storage control apparatus 14. The platform access apparatus 11 is connected to another apparatus in the resource scheduling system 100, the platform access apparatus 11 is an apparatus that is in the resource scheduling system 100 and that is connected to a cloud management platform 21 of a runtime instance, and the another apparatus in the resource scheduling system 100 may exchange information with the cloud management platform 21 of the runtime instance through the platform access apparatus 11.

The following separately describes functions of the cloud management platform 21 of the runtime instance and the apparatuses in the resource scheduling system 100 by using the following (1) to (5).

(1) Cloud management platform 21 of the runtime instance

There are a plurality of types of cloud management platforms 21 in the resource scheduling system 100. As shown in FIG. 1, the plurality of types of cloud management platforms 21 are all cloud management platforms that provide infrastructure as a service (infrastructure as a service, IaaS). There is at least one cloud management platform 21 of each type, types of runtime instances managed by cloud management platforms 21 of a same type are the same, and types of runtime instances managed by cloud management platforms 21 of different types are different. FIG. 1 shows three types of cloud management platforms 21: OpenStack, Kubernetes, and Serverless. Runtime instances corresponding to OpenStack, Kubernetes, and Serverless are respectively a virtual machine instance, a container instance, and a serverless function instance. A virtual machine instance is a virtual machine, a container instance is a container, and a serverless function instance is a serverless function.

Any cloud management platform 21 has a management function for runtime instances of a same type, for example, establishing or deleting a runtime instance, performing service scheduling between a plurality of runtime instances of a same type, and obtaining related information of the runtime instance.

As shown in FIG. 1, each cloud management platform 21 is connected to a plurality of nodes 22, and the cloud management platform 21 may establish a runtime instance on the node 22 connected to the cloud management platform 21, to implement configuration of the runtime instance. A virtual machine instance is used as an example. OpenStack separately establishes a virtual machine on a node 0 and a node 3, and OpenStack may schedule a service that is run by the virtual machine on the node 0 to the virtual machine on the node 1. A container instance is used as an example. Kubernetes separately establishes a container on a node 1 and a node 4, and Kubernetes may schedule a service that is run by the container on the node 1 to the container on the node 4. A function instance is used as an example. Serverless separately establishes a serverless function on a node 2 and a node 5, and Serverless may schedule a service that is run by the serverless function on the node 2 to the serverless function on the node 5. Certainly, service scheduling may also be performed between a plurality of runtime instances on a same node 22.

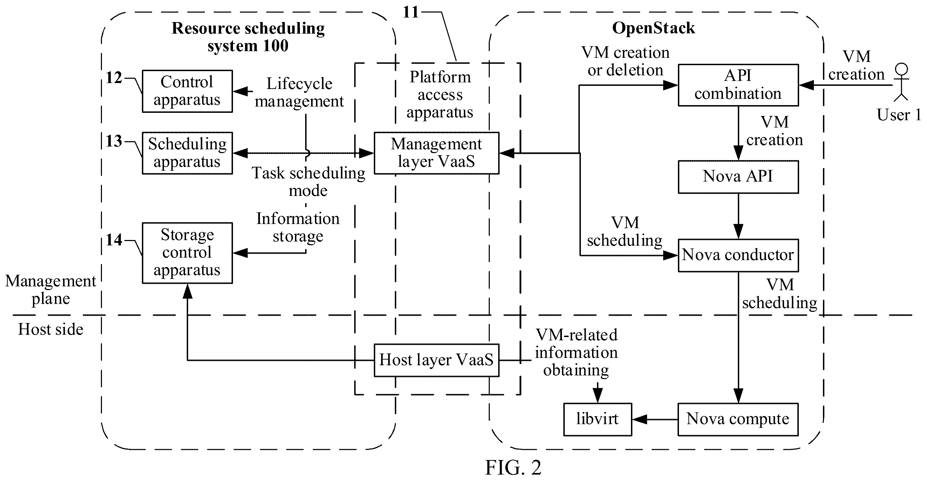

The cloud management platform 21 can manage runtime instances of the cloud management platform 21 and perform task scheduling between the runtime instances based on a requirement of a user (for example, an administrator of the cloud management platform 21 or a tenant of the runtime instance). For example, the cloud management platform 21 is OpenStack, and OpenStack creates a virtual machine. FIG. 2 is a diagram of interaction between a resource scheduling system and OpenStack according to an embodiment of this application. A user 1 delivers a virtual machine (VM) creation instruction to an application programming interface (application programming interface, API) combination (combination) on a management plane of OpenStack. The API combination invokes a nova API according to the instruction to create a VM. After receiving an invoking request for creating the VM, the nova API delivers a VM creation command to a nova conductor. According to the command, the nova conductor sends a VM creation command to a node 22 through nova compute on a host side, to create the VM on the node 22. The API combination is a unified invocation interface formed by combining a plurality of APIs. The nova API and the nova conductor are respectively used to create and manage the VM. Nova compute is used to send a command to the VM or the node 22 on which the VM is located, to obtain status information of the VM.

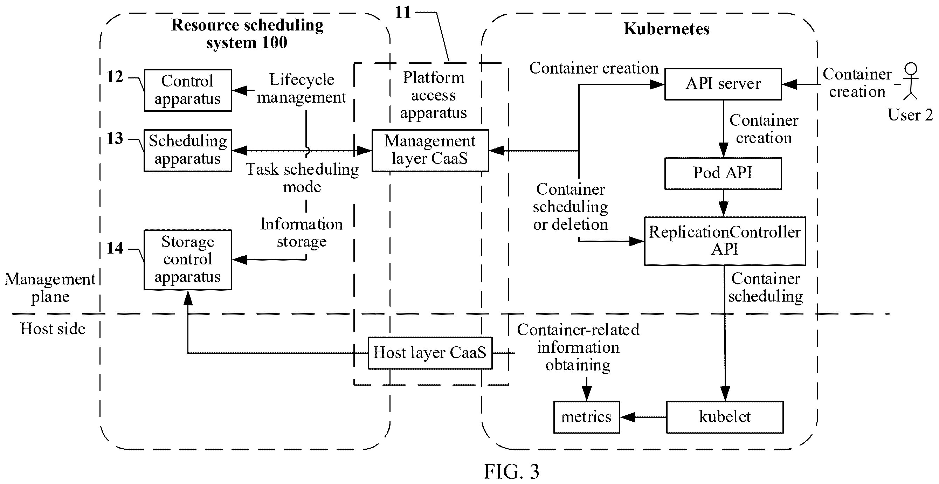

For example, the cloud management platform 21 is Kubernetes, and Kubernetes creates a container. FIG. 3 is a diagram of interaction between a resource scheduling system and Kubernetes according to an embodiment of this application. A user 2 delivers a container creation instruction to an application programming interface server (API Server) on a management plane of Kubernetes. The API server invokes a pod API according to the instruction to create a container. After receiving an invoking request for creating the container, the pod API sends a container creation command to a ReplicationController API. According to the command, the ReplicationController API creates the container on a node 22 through kubelet. The API server is one of the most important components in Kubernetes, and is responsible for managing all API resources in Kubernetes. The pod API is used to create and manage the container. The ReplicationController API is an API interface for creating and managing ReplicaSet and deployment resources, and creates, expands, shrinks, and updates a pod set by creating and managing the ReplicaSet resource and the deployment resource; and kubelet is an agent running on each node 22 in Kubernetes, and is responsible for interacting with the API server and managing the container.

(2) Platform access apparatus 11

The platform access apparatus 11 is an apparatus that is in the resource scheduling system 100 and that is connected to the cloud management platform 21. The platform access apparatus 11 supports access to a plurality of cloud management platforms 21. FIG. 1 is used as an example. The platform access apparatus 11 accesses three cloud management platforms 21 such as OpenStack, Kubernetes, and Serverless. It should be understood that FIG. 1 shows only an example in which the platform access apparatus 11 accesses the three cloud management platforms 21. In some other embodiments, the platform access apparatus 11 may be connected to any two of the three cloud management platforms 21, or may access at least four cloud management platforms 21. The at least four cloud management platforms 21 may include the three cloud management platforms 21 shown in FIG. 1 and another cloud management platform 21 (for example, a cloud management platform of a runtime instance like a bare metal server), or may not include the three cloud management platforms 21 shown in FIG. 1. A quantity of cloud management platforms 21 to which the platform access apparatus 11 supports access is not limited in embodiments of this application herein.

In a possible implementation, the platform access apparatus 11 is connected to the cloud management platform 21 through a platform access interface. For example, the platform access apparatus 11 is configured with a plurality of platform access interfaces, and the plurality of platform access interfaces support access to different cloud management platforms 21. As shown in FIG. 1, the platform access apparatus 11 deploys the plurality of platform access interfaces to different cloud management platforms 21, to implement access (that is, connection) to a plurality of cloud management platforms 21. Any platform access interface meets a service protocol supported by an accessed cloud management platform. For example, a platform access interface deployed in OpenStack supports a virtual machine as a service (virtual machine as a service, VaaS) protocol, a platform access interface deployed in Kubernetes supports a container as a service (CaaS) protocol, and a platform access interface deployed in Serverless supports a container as a service (function as a service, FaaS) protocol. The platform access apparatus 11 or an apparatus other than the platform access apparatus 11 can invoke a platform access interface to interact with the cloud management platform 21 connected to the platform access interface, for example, send an instruction to the cloud management platform 21, or obtain related information of a runtime instance from the cloud management platform 21, so that each apparatus effectively manages and schedules resources of the cloud management platform 21, thereby effectively scheduling service operations in a unified manner, and improving overall efficiency and stability of the system.

In a possible implementation, platform access interfaces provided by the platform access apparatus 11 for a same cloud management platform 21 include a management layer interface and a host layer interface. The management layer interface is used to connect to a management plane interface (an interface used to manage and create a runtime instance) of the cloud management platform 21. The host layer interface is used to connect to a host side interface (for example, an interface used by a host side to collect related information of the runtime instance) of the cloud management platform 21.

For example, the platform access apparatus 11 is connected to OpenStack. As shown in FIG. 2, a management layer interface and a host layer interface provided by the platform access apparatus 11 for OpenStack are a management layer VaaS interface and a host layer VaaS interface respectively. The management layer VaaS interface is connected to the API combination and a nova conductor in the management plane of OpenStack, to create or delete the VM through the API combination, and perform service scheduling on the VM through the nova conductor interface, so as to implement management of the virtual machine. The host layer VaaS interface is connected to libvirt on the host side of OpenStack, to obtain VM-related information from libvirt, where libvirt is a universal virtualization interface, and libvirt is used to obtain detailed information about the VM. The nova compute interface may send status information of each VM to libvirt, so that libvirt collects the status information of the VM. It should be understood that libvirt can further collect other information about the VM in addition to the status information, to obtain the detailed information about the VM.

For another example, the platform access apparatus 11 is connected to Kubernetes. As shown in FIG. 3, a management layer interface and a host layer interface provided by the platform access apparatus 11 for Kubernetes are a management layer CaaS interface and a host layer CaaS interface respectively. The management layer CaaS interface is connected to an API server and a pod API in the management plane of Kubernetes, to create the container through the API server, and perform service scheduling on the container or delete the container through the pod API, so as to implement management of the container. The host layer CaaS interface is connected to metrics on a host side of Kubernetes, to obtain container-related information from metrics, where metrics is a monitoring system, and is used to obtain status information and performance indicator data of each container, and kubelet may send the status information of each container to metrics, so that metrics collects the status information and the performance indicator data of the container.

All apparatuses other than the platform access apparatus 11 in the resource scheduling system 100 can invoke the plurality of platform access interfaces. At a same moment, the platform access apparatus 11 may receive invocation requests of a plurality of other apparatuses for a plurality of platform access interfaces, and the platform access apparatus 11 may process the invocation requests for the plurality of platform access interfaces in parallel, to efficiently process the invocation requests in a multi-thread manner.

In a possible implementation, the platform access apparatus 11 further complies with constraint conditions such as security and scalability, to ensure that the entire system can run securely and support large-scale service processing. For example, the platform access apparatus 11 is further configured with a configuration interface. The configuration interface is used to load and remove the platform access interface in the platform access apparatus 11, so that the platform access apparatus 11 supports dynamic loading and unloading of a plug-in service, and a function of the platform access interface can be conveniently extended and replaced, to meet requirements of different service scenarios.

The plurality of platform access interfaces and the configuration interface that are configured on the platform access apparatus 11 are all APIs, so that the resource scheduling system 100 provides abundant APIs through the platform access apparatus 11. In this way, an apparatus/module outside the resource scheduling system 100, an apparatus inside the resource scheduling system 100, or a user can conveniently manage and schedule resources of different cloud management platforms 21. In a possible implementation, the plurality of platform access interfaces and the configuration interface that are configured on the platform access apparatus 11 are all plug-in interfaces. In this way, an apparatus/module outside the resource scheduling system 100, an apparatus inside the resource scheduling system 100, or a user manages and schedules resources of different cloud management platforms 21 by using a plug-in.

In a possible implementation, the platform access apparatus 11 further supports service process configuration, and customizes a service process based on a user need. For example, a set of service processes are separately customized for a plurality of cloud management platforms 21, so that apparatuses inside and outside the resource scheduling system 100 can interact with the cloud management platform based on a corresponding service process.

In a possible implementation, the platform access apparatus 11 is further configured to manage resources and services on each cloud management platform 21. The platform access apparatus 11 further has a management function for various types of runtime instances, for example, container orchestration and virtual machine management, to meet requirements of different users.

It should be understood that the platform access apparatus 11 provides a set of standard interfaces, so that different services of various types of runtime instances can be seamlessly integrated into a service automatic scheduling system, namely, the resource scheduling system 100.

The foregoing possible implementations of the platform access apparatus 11 may be further combined to provide more implementations. It should be understood that the platform access apparatus 11 may access the cloud management platform 21 of a plurality of types of runtime instances, to implement management and scheduling across the plurality of types of runtime instances.

(3) Control apparatus 12

The control apparatus 12 is a control center of the resource scheduling system 100, and is configured to manage a running status of the resource scheduling system 100. For example, the control apparatus 12 has a plurality of functions such as providing an API interface, recording a log, and monitoring a system running status. Certainly, in addition, the control apparatus 12 may further have another management function for the resource scheduling system 100.

The control apparatus 12 has a management function for runtime instances of all cloud management platforms 21 that access the platform access apparatus 11. For example, the control apparatus 12 interacts with each underlying cloud management platform 21 through the platform access apparatus 11. Through the interaction with each cloud management platform 21, the control apparatus 12 performs lifecycle management on a runtime instance of each cloud management platform 21, and collects related information of each runtime instance of each cloud management platform 21. Related information of any runtime instance includes a network protocol (internet protocol, IP) address of a runtime environment, a runtime environment label, an image/runtime instance used in the runtime environment, a name of each service that is run in the runtime environment, a running status of each service, and consumption of various resources of the runtime instance.

For example, the cloud management platform 21 is OpenStack. Refer to FIG. 2. The control apparatus 12 sends, to the API combination in OpenStack by invoking the management layer VaaS interface in the platform access apparatus 11, an instruction used to instruct to create or delete a VM, and the API combination invokes a nova API according to the instruction to create or delete a VM on the node 22. The control apparatus 12 sends an instruction to libvirt by invoking the host layer VaaS interface in the platform access apparatus 11, to obtain related information of each VM from information collected by libvirt.

For another example, the cloud management platform 21 is Kubernetes. Refer to FIG. 3. The control apparatus 12 sends, to an API server in Kubernetes by invoking the management layer CaaS interface in the platform access apparatus 11, an instruction used to instruct to create or delete a container, and API server invokes a pod API according to the instruction to create a container on the node 22. The control apparatus 12 sends an instruction to metrics in Kubernetes by invoking the host layer CaaS interface in the platform access apparatus 11, to obtain related information of each container from information collected by metrics.

The control apparatus 12 and each cloud management platform 21 each provide an access interface (for example, a page or an API). A tenant may operate a client to remotely access the access interface, and purchase a runtime instance on a resource purchase page. After the purchase is successful, the control apparatus 12 (or the cloud management platform 21) allocates the purchased runtime instance to the tenant on the node 22, and provides a remote login account and password of the purchased runtime instance. The client may remotely log in to the runtime instance, and install and run a service of the tenant in the runtime instance.

The resource purchase page provides an elastic billing mode option and a flexible billing mode option, or the resource purchase page provides a flexible billing mode option but does not provide an elastic billing mode. The elastic billing mode and the flexible billing mode respectively correspond to two resource adjustment modes: an elastic adjustment mode and a flexible scheduling mode. The tenant may select the elastic billing mode option or the flexible billing mode option on the purchase page to purchase the runtime instance.

In the elastic billing mode, the tenant specifies a specification of the purchased runtime instance. The control apparatus 12 (or the cloud management platform 21) establishes a runtime instance of a specified specification for the tenant, and runs the service of the tenant in the runtime instance of the specified specification. In the elastic adjustment mode, when scheduling a runtime instance for the service of the tenant, the scheduling apparatus 13 schedules the service of the tenant to another runtime instance of the specified specification for running. In this case, in the elastic billing mode, billing is performed based on the specified specification. If a quantity of resources needed for running the service of the tenant does not reach the specified specification, some resources of the runtime instance of the service are wasted, but a fee is calculated based on the specified specification. Therefore, unnecessary overheads of the tenant are increased.

In the flexible billing mode, the tenant specifies a maximum specification of the purchased runtime instance. In the flexible adjustment mode, the scheduling apparatus 13 first establishes a runtime instance of the maximum specification for the tenant. When the service of the tenant is run in the runtime instance, if QoS of the application is degraded, the control apparatus 12 determines a quantity of resources needed for running the service, determines, based on a flexible computing mode and the quantity of resources needed for running the service, a new quantity of resources to be allocated to the service, allocates resources that are of another runtime instance and that have the new resource quantity to the service, and runs the service in the another runtime instance; or ends another service in the runtime instance of the service, releases a quantity of resources occupied by the another service, and allocates a resource to the service from the released quantity of resources, so that the service has resources that have a new resource quantity. In the flexible billing mode, billing is performed based on an actual quantity of resources used for the service, and the actual quantity of used resources is less than a quantity of resources of the maximum specification specified by the tenant. Therefore, the flexible billing mode can avoid unnecessary overheads of the tenant, avoid a waste of resources of the runtime instance, and increase resource utilization of the runtime instance. For a cloud provider and the tenant, this is a win-win policy.

If the tenant purchases a runtime instance from any cloud management platform 21, the cloud management platform 21 reports purchase information of the tenant to the control apparatus 12 through the platform access apparatus 11. If the tenant purchases a runtime instance from the purchase page provided by the control apparatus 12, the control apparatus 12 may obtain the purchase information, and does not need to obtain the purchase information from the cloud management platform 21. The purchase information includes an identifier of the tenant, an identifier of a billing mode selected by the tenant when the tenant purchases the runtime instance, and a specification of the purchased runtime instance, and the specification includes a resource quantity of at least one resource.

After obtaining the purchase information, the control apparatus 12 allocates the runtime instance to the tenant based on the purchase information. For example, the control apparatus 12 sends a runtime instance allocation request to the scheduling apparatus 13 based on the purchase information, where the runtime instance allocation request includes the purchase information, to indicate to allocate a runtime instance that meets information about the specification to the tenant. After receiving the runtime instance allocation request, the scheduling apparatus 13 allocates the runtime instance to the tenant based on the specification in the runtime instance allocation request. For example, a resource pool is configured in the scheduling apparatus 13. The resource pool includes identifiers of a plurality of idle runtime instances and specifications of the idle runtime instances. The plurality of idle runtime instances are runtime instances that are not used in cloud management platforms 21 accessed by the resource scheduling system 100. The scheduling apparatus 13 may allocate a runtime instance of a specified specification (that is, the specification in the purchase information) to the tenant from an idle resource pool. Alternatively, the scheduling apparatus 13 does not allocate the runtime instance to the tenant from the resource pool, and the scheduling apparatus 13 establishes, on the cloud management platform 21, a runtime instance that can meet the specification specified by the tenant, and allocates the established runtime instance to the tenant. After the runtime instance is allocated to the tenant, an allocation complete response is sent to the control apparatus 12, where the allocation complete response includes a remote login account and password of the runtime instance allocated to the tenant. Then, the control apparatus 12 returns the remote login account and password to the tenant.

The runtime instance allocation request further indicates to schedule the service of the tenant based on a resource adjustment mode corresponding to a payment mode selected by the tenant. In a process in which the service of the tenant is run in the runtime instance, the control apparatus 12 detects whether the service meets a scheduling condition, and if the service meets the scheduling condition, schedules the service in runtime instances of a plurality of cloud management platforms 21.

The control apparatus 12 can further perform task scheduling and management on a runtime instance of each cloud management platform 21 based on a user requirement. For example, a user may deliver an instruction to the control apparatus 12 to instruct to establish or delete a runtime instance on a cloud management platform 21. In this case, the control apparatus 12 notifies, according to the instruction through the platform access apparatus 11, the cloud management platform 21 to establish or delete the runtime instance. For another example, instance scheduling is performed between different nodes 22. For example, a container instance on the node 1 is scheduled to the node 0, so that two types of runtime instances: a virtual machine and a container exist on the node 0. For another example, the control apparatus 12 delivers a resource adjustment mode of a running service in each runtime instance to the scheduling apparatus 13, and the scheduling apparatus 13 performs service scheduling between different runtime instances and/or performs instance scheduling between different nodes 22 based on the resource adjustment mode of the service.

The resource scheduling system 100 supports a plurality of tenants. The control apparatus 12 further supports security management on services of the plurality of tenants. For example, the control apparatus 12 provides an isolation protection measure for a service of each tenant, to isolate and protect services of different tenants.

(4) Scheduling apparatus 13

The scheduling apparatus 13 is an apparatus responsible for service scheduling and instance scheduling in the resource scheduling system 100, can perform service scheduling between a plurality of runtime instances of a same type, and can perform instance scheduling between different nodes, to implement resource scheduling across runtime instances.

The scheduling apparatus 13 and the control apparatus 12 may directly communicate with each other, or may indirectly communicate with each other through the platform access apparatus 11. The scheduling apparatus 13 can obtain a resource adjustment mode of each service from the control apparatus 12, and can further monitor a resource usage status of each runtime instance, so that different nodes 2 can perform service scheduling between runtime instances of a plurality of types based on the resource usage status of each runtime instance and a resource adjustment mode of a service that is run in each runtime instance. The scheduling apparatus 13 has a plurality of resource adjustment modes and an efficient design. This ensures data and service confidentiality and integrity.

In a possible implementation, after scheduling of any service is completed, in a running process of the service, the scheduling apparatus 13 further monitors a running status of the service in a runtime instance to which the service is scheduled. When an exception occurs in service running, the scheduling apparatus 13 performs exception processing on the service, for example, schedules the service to a newly obtained runtime instance. Certainly, the scheduling apparatus 13 may not monitor the running status of the service and does not perform exception processing on the service, and the control apparatus 12 monitors the running status of the service and performs exception processing on the service.

FIG. 1 shows an example in which the control apparatus 12 and the scheduling apparatus 13 are different devices. In some other embodiments, the control apparatus 12 and the scheduling apparatus 13 may be integrated into a same device. In this case, both the control apparatus 12 and the scheduling apparatus 13 are modules of a device in which the control apparatus 12 and the scheduling apparatus 13 are located.

(5) Storage control apparatus 14

The storage control apparatus 14 is an apparatus responsible for data reading and writing in the resource scheduling system 100, and is configured to provide a data storage service for another apparatus in the resource scheduling system 100 and each cloud management platform 21 connected to the resource scheduling system 100.

Different cloud management platforms 21 may support configuration of a same storage system or different storage systems. A same cloud management platform 21 supports configuration of at least one storage system. For example, OpenStack supports configuration of a block storage system or an object storage system. When OpenStack is configured with the block storage system, OpenStack may access a block storage subsystem through Cinder. When OpenStack is configured with the object storage system, OpenStack may access the object storage system through Swift. Cinder introduces a layer of "logical storage volume" abstraction between a virtual machine and a storage node. Cinder provides a plug-in mechanism in which Cinder integrates with a plurality of storage backends such as a logical volume manager (logical volume manager, LVM), a network file system (network file system, NFS), and a scalable network file system (Gluster file system, GlusterFS), so that Cinder supports different types of storage nodes. Cinder invokes driver interfaces of different storage backend types to manage corresponding backend storage, and provides a unified storage interface for the user to perform a volume-related operation. Swift provides a hypertext transfer protocol (hypertext transfer protocol, HTTP) API and an object storage protocol. Swift may store data to a distributed storage system through the API or the direct object storage protocol. For another example, Kubernetes supports configuration of a persistent storage system, and Kubernetes may implement persistent storage by using a persistent volume (persistent volume, PV) and a persistent volume claim (persistent volume claim, PVC). The PV represents a storage resource, and may be a local storage device on a host or a storage volume on a remote storage server. The PVC represents a request of an application program (for example, a running service) for a storage resource.

To connect to a storage system that can be configured on each cloud management platform 21, the storage control apparatus 14 includes a plurality of storage access interfaces. The plurality of storage access interfaces respectively correspond to different cloud management platforms 21, and the storage access interface supports access to a storage system configured on a corresponding cloud management platform 21. When a same cloud management platform 21 supports configuration of a plurality of storage systems, the cloud management platform 21 may correspond to a plurality of storage access interfaces, to access, through a corresponding storage access interface, the storage system configured on the cloud management platform 21. The storage access interface and the storage system that can be accessed through the storage access interface use a same storage protocol, so that the storage access interface can interact with the storage system that can be accessed through the storage access interface. For example, when an apparatus inside or outside the resource scheduling system 100 or the cloud management platform 21 needs to access a storage system, the apparatus or the cloud management platform 21 may access the storage system by invoking a storage access interface accessed by the storage system, to read and write data in the storage system.

In a possible implementation, the resource scheduling system 100 further provides a distributed storage system. The distributed storage system includes a plurality of storage subsystems, each storage subsystem includes a plurality of storage nodes, and the storage nodes are configured to store data. Types of the plurality of storage subsystems are different, storage protocols supported by the plurality of storage subsystems are different, and data stored in storage nodes in a same storage subsystem has a same type or format. Data stored in storage nodes in different storage subsystems has different types or formats. The plurality of storage subsystems include at least two of a block storage system, an object storage system, a file storage system, and a persistent storage system. Certainly, there may be another type of storage subsystem. A system type of each storage subsystem in the distributed storage system is not limited in embodiments of this application herein.

The plurality of storage subsystems support configuration of different cloud management platforms 21. The storage subsystem is configured to store related information of a runtime instance of the configured cloud management platform 21 and service data (for example, data generated in a service running process) of each service that is run in the runtime instance of the cloud management platform 21. The storage control apparatus 14 is a control core in the distributed storage system. Each storage access interface of the storage control apparatus 14 accesses the plurality of storage subsystems. When any cloud management platform 21 accesses the resource scheduling system 100, the control apparatus 12 configures a storage subsystem for the cloud management platform 21 from the plurality of storage subsystems. Certainly, the cloud management platform 21 may alternatively have a built-in storage system. The control apparatus 12 (or the cloud management platform 21) controls the built-in storage system to access a corresponding storage access interface in the storage control apparatus 14, so that the apparatus inside or outside the resource scheduling system 100 can subsequently access the storage system through the storage access interface.

Each cloud management platform 21 may access, through the platform access apparatus 11 and the storage control apparatus 14, a storage system (for example, a storage subsystem or a built-in storage system) configured on the cloud management platform 21. For example, the cloud management platform 21 sends a data read/write request to the platform access apparatus 11 through a platform access interface accessed by the cloud management platform 21, to indicate to read/write data in the storage configured on the cloud management platform 21. After receiving the data read/write request, the platform access apparatus 11 sends a data read/write request to the storage control apparatus 14. After receiving the data read/write request from the platform access apparatus 11, the storage control apparatus 14 reads/writes, based on the data read/write request, data in the storage system configured on the cloud management platform 21. For example, the storage control apparatus 14 sends, based on the data read/write request, a read/write instruction to a storage access interface corresponding to the cloud management platform 21. The storage access interface reads/writes, according to the read/write instruction, data in the storage system configured on the cloud management platform 21, so that the cloud management platform 21 can also access, based on the resource scheduling system 100, the storage system configured on the cloud management platform 21.

In another possible implementation, the resource scheduling system 100 does not provide a distributed storage system, and each cloud management platform 21 accessing the resource scheduling system 100 has a built-in storage system. The cloud management platform 21/control apparatus 12 controls the built-in storage system to access a corresponding storage access interface in the storage control apparatus 14, so that the apparatus inside or outside the resource scheduling system 100 can subsequently access the storage system through the storage access interface.

When a service is scheduled from a runtime instance to another runtime instance for running, the storage control apparatus 14 may further perform format conversion on service data generated when the original runtime instance runs the service, so that a data format of converted service data meets a requirement of the runtime instance to which the service is to be scheduled. In this way, data sharing and collaboration can be implemented between different types of runtime instances.

When storing data in the storage system configured on the cloud management platform 21, the storage control apparatus 14 may further use a distributed storage technology to copy and back up the data to a plurality of storage nodes 22 of the storage system, so as to ensure data reliability and fault tolerance, improve data availability and security, and cope with an unpredictable fault situation. The storage control apparatus 14 may further use a load balancing policy, so that load can be distributed between the storage nodes 22 in the storage system, to improve system scalability and concurrency. The storage control apparatus 14 may use a multilayer identity authentication policy and permission management policy to ensure system security and manageability. The storage control apparatus 14 may further provide functions such as monitoring and log recording, to facilitate management and maintenance of the distributed storage system by the user.

The storage control apparatus 14 is further connected to a target storage system. The target storage system may be a storage system configured for the resource scheduling system 100 separately, or may be a storage system configured for a cloud management platform. The target storage system is configured to provide a data storage service for each apparatus in the resource scheduling system 100. Information such as information collected by the control apparatus 12 in the resource scheduling system 100, information needed by the scheduling apparatus 13 in a scheduling process, configuration information of the platform access apparatus 11, configuration information of the control apparatus 12, configuration information of the scheduling apparatus 13, configuration information of the storage control apparatus 14, and a consumption status and a remaining status of storage resources of each storage system connected to the storage control apparatus 14 may be all stored in the target storage system. The information collected by the control apparatus 12 includes related information of each runtime resource of each cloud management platform, purchase information of each tenant, a resource adjustment mode and a billing mode of a service of each tenant, a resource consumption status and a resource remaining status of each node configured on each cloud management platform, and the like. The information needed by the scheduling apparatus 13 in the scheduling process includes, for example, a resource adjustment mode of a service, purchase information of a tenant of the service, and all or some related information of a runtime instance of the service.

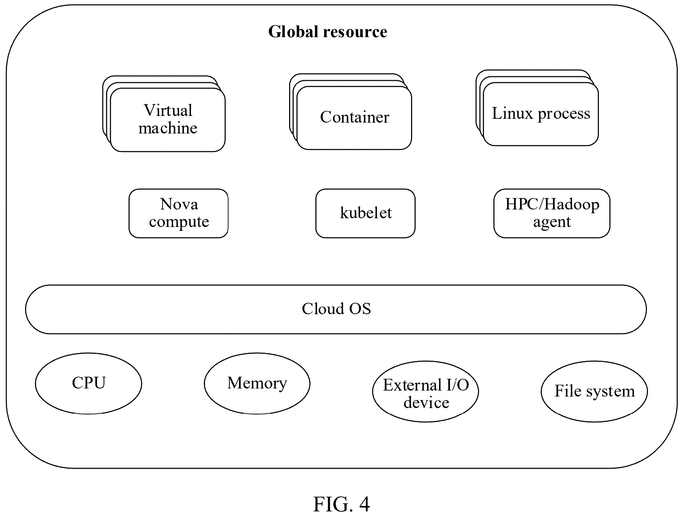

Based on the foregoing descriptions of the apparatuses in the resource scheduling system 100, resources of all the cloud management platforms 11 accessed by the resource scheduling system 100 may form a global resource of the resource scheduling system 100. FIG. 4 is a diagram of a global resource of a resource scheduling system according to an embodiment of this application. The global resource includes a runtime instance resource and a host side resource. The runtime instance resource includes runtime instances (such as a virtual machine, a container, a Linux process, and a serverless function) in nodes 22 of all the cloud management platforms 11. The host side resource is hardware resources and software resources of all the nodes 22 of all the cloud management platforms. The hardware resources include, for example, a CPU, a memory, and an external input/output (input/output, I/O) device. The software resources include, for example, a file system. A host side resource of each node 22 may be managed by an operating system (operating system, OS) of each node 22, and the operating system of the node 22 is also referred to as a cloud OS.

Each apparatus in the resource scheduling system 100 may invoke a plug-in that is on each cloud management platform 21 and that is connected to a host side, to manage a runtime instance resource of each cloud management platform 21. For example, each apparatus may invoke nova compute in OpenStack to obtain status information of each virtual machine managed by OpenStack. For another example, each apparatus invokes kubelet in Kubernetes to perform service scheduling on a container managed by Kubernetes. For another example, each apparatus invokes a high performance computing (high performance computing, HPC) agent/Hadoop agent (agent) of a cloud management platform of a Linux process to manage the Linux process. Therefore, the resource scheduling system 100 can perform global management on a plurality of types of runtime instances.

The control apparatus 12 and/or the scheduling apparatus 13 may invoke a plug-in that is on each cloud management platform 21 and that is connected to the host side, to interact with the OS of each node 22, to determine a hardware resource and a software resource of each node 22 and collect a hardware resource consumption status and a software resource usage status of each node, so as to monitor a global hardware resource, a global software resource, a resource consumption status of the global hardware resource, a usage status of the global software resource, and the like of the resource scheduling system 100 in real time. In this way, a runtime instance is created and managed on each node 22 based on the global hardware resource, the global software resource, the resource consumption status of the global hardware resource, the usage status of the global software resource, and the like. In some embodiments, a same type of runtime instance may be established on nodes 22 of a same cloud management platform 21, or a plurality of types of runtime instances may be established on nodes 22 of a same cloud management platform 21, to share hardware resources and software resources on host sides of a plurality of cloud management platforms 12, and perform global management on the hardware resources and the software resources on the host sides of the plurality of cloud management platforms 12.

The resource scheduling system 100 performs global management on runtime instance resources and hardware resources and software resources on host sides of all accessed cloud management platforms 12, to integrate related information of runtime instances of various types of cloud management platforms 12, so as to resolve a problem of information isolation between different types of cloud management platforms, and resolve a problem of information isolation between a plurality of cloud management platforms of a same type. Information in the information isolation may be information about a runtime instance, information about a hardware resource, information about a softened resource, and the like.

Because the platform access apparatus 11 supports access to a plurality of cloud management platforms 21, all other apparatuses in the resource scheduling system 100 can interact with different cloud management platforms 21, so that the control apparatus 12 performs unified management on runtime instances of the plurality of cloud management platforms 21, the scheduling apparatus 13 performs unified service scheduling between the runtime instances of the plurality of cloud management platforms 21, and the storage control apparatus 14 can provide a storage service for the plurality of cloud management platforms 21. In this way, the resource scheduling system 100 can provide a consistent service scheduling service for an application of the tenant. This simplifies a service management process, improves management efficiency, and reduces operation and maintenance costs. Based on the architecture of the resource scheduling system 100, automatic deployment and scheduling of a distributed application program can be implemented, thereby improving service processing efficiency and resource utilization. Because the platform access apparatus 11 and the control apparatus 13 are configured to support a flexible configuration interface, the resource scheduling system 100 has good scalability and flexibility, and can adapt to various different service scenarios and requirements. In conclusion, the resource scheduling system 100 is a unified service scheduling architecture that can implement scheduling across a plurality of types of runtime instances. The architecture has efficient resource utilization and service benefits.

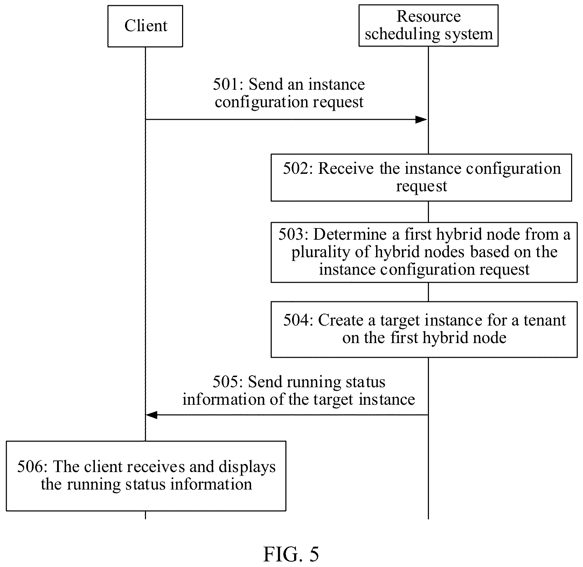

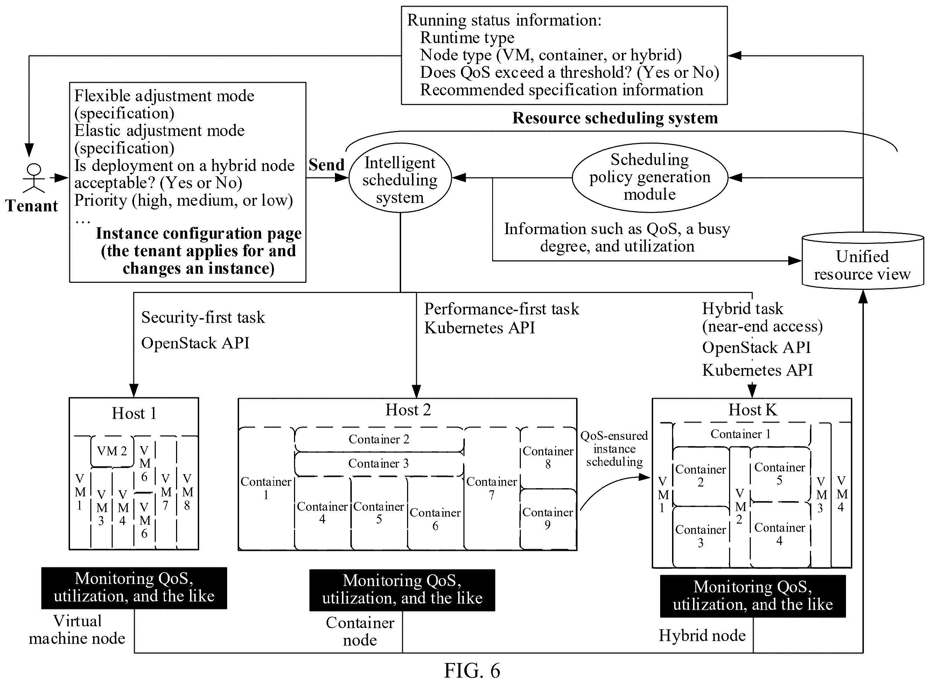

In another possible implementation, the resource management system 100 is configured to manage resources of a plurality of nodes 22. The plurality of nodes 22 are classified into a hybrid node and a non-hybrid node. There are a plurality of hybrid nodes. The hybrid node is a node that supports at least two types of runtime instances. The types of the runtime instances include a container, a virtual machine, a serverless function, and another runtime type. The non-hybrid node supports one type of runtime instance. For example, a node that supports only deployment of a virtual machine is a non-hybrid node (referred to as a virtual node), and a node that supports only deployment of a container is a non-hybrid node (referred to as a container node). For example, in FIG. 6, there are K (K>2) hosts managed by the resource scheduling system, and each host is one node, where a host 1 is a virtual machine node, a host 2 is a container node, and a host K is a hybrid node. For any node 22, the control apparatus 12 may further configure the node 22 as a hybrid node or a non-hybrid node, to create different types of runtime instances on the hybrid node, or create, on the non-hybrid node, a runtime instance of which the non-hybrid node supports a runtime type. Because the hybrid node supports the at least two types of runtime instances, hybrid deployment across runtime instances can be implemented. The following describes a manner of hybrid deployment of a runtime instance with reference to FIG. 5.

FIG. 5 is a flowchart of a method for hybrid deployment across runtime instances based on a cloud computing technology according to an embodiment of this application. The method is completed through interaction between a client and a resource scheduling system. The resource scheduling system is configured to manage resources of a plurality of hybrid nodes. Based on this, a process of deploying the runtime instance is performed by the resource scheduling system. The resource scheduling system is the foregoing described resource scheduling system based on the cloud computing technology. The method includes the following steps.

501: The client sends an instance configuration request to the resource scheduling system, where the instance configuration request indicates to deploy a target instance on the hybrid node, and a runtime type of the target instance is a type of the runtime instance.

The target instance is any runtime instance purchased by any tenant, and the runtime type of the target instance is a container, a virtual machine, a serverless function, or another runtime type. The target instance is used to run a service (referred to as a target service) of the tenant. The instance configuration request includes at least one of an identifier of a target runtime type, an identifier of a target node type, an identifier of a target adjustment mode, target specification information, and instance priority information. The target runtime type is the runtime type of the target instance, the target node type is a type of a node used to deploy the target instance, and the node type is classified into a hybrid node type and a non-hybrid node type. The target adjustment mode is a resource adjustment mode (an elastic adjustment mode or a flexible adjustment mode) supported by the target instance, and the target specification information is a specification of the target instance in the target adjustment mode. The instance priority information is used to determine quality of service of the target instance on the node.

A hybrid deployment procedure shown in FIG. 6 is used as an example. When the tenant completes purchase of the target instance or purchases the target instance, the tenant configures an instance parameter of the target instance on an instance configuration page provided by the client, to apply for creating the instance. As shown in FIG. 6, the instance configuration page includes a runtime type configuration option, a hybrid deployment configuration option, a priority configuration option, and a scheduling mode configuration option. The runtime type configuration option is used to configure the target runtime type. The runtime type configuration option provides a plurality of runtime types. The tenant performs a selection operation on any one of the plurality of runtime types. In response to the selection operation, the client determines the any runtime type as the target runtime type.

The hybrid deployment option is used to determine whether deploying the target instance on the hybrid node is acceptable to the tenant. If the tenant performs an accept determining operation on the hybrid deployment option, the client determines the hybrid node type as the target node type in response to the accept determining operation. If the tenant performs a reject determining operation on the hybrid deployment option, the client determines the non-hybrid node type as the target node type in response to the reject determining operation. In a possible implementation, for a service requirement of the target service, the tenant may select a target runtime type and a target node type for the target instance. As shown in FIG. 6, if the target service requires secure running, the tenant may use a virtual machine as the target runtime type, and use a non-hybrid node as the target node type, to choose to establish the target instance on a virtual machine node. If the target service requires high-performance running, the tenant may use a container as the target runtime type, and use a non-hybrid node as the target node type, to choose to establish the target instance on a container node. If the target service does not have a high requirement on secure running and performance, for example, requires only near-end access, the tenant may use a hybrid node as the target node type, and the target runtime type may be selected based on another requirement of the service.

The priority configuration option is used to configure the instance priority information of the target instance. The priority configuration option provides a plurality of service priorities, and different service priorities correspond to different quality of service levels. As shown in FIG. 6, there are three service priorities: a high service priority, a medium service priority, and a low service priority. Quality of service levels corresponding to the three service priorities decrease in sequence. In another possible implementation, there may be more or fewer than three service priorities. A quantity of service priorities is not limited herein, and different service priorities are set to meet quality of service requirements of different services. The tenant performs a selection operation on any one of the plurality of service priorities, and the client determines an identifier of the any service priority as the instance priority information of the target instance in response to the selection operation.

The scheduling mode configuration option is used to configure the target adjustment mode and the target specification information. The adjustment mode configuration option includes an elastic adjustment mode sub-option and a flexible mode sub-option. For either of the elastic adjustment mode sub-option and the flexible mode sub-option, the tenant configures a specification of the target instance in the sub-option, and performs a selection determining operation on the sub-option. In response to the selection determining operation, the client determines a resource adjustment mode represented by the sub-option as the target adjustment mode, and determines information about the specification configured in the sub-option as the target specification information.

Then, the client generates the instance configuration request based on the determined target runtime type, target node type, target adjustment mode, target specification information, and instance priority information, and sends the instance configuration request to the resource scheduling system. When the target node type is the hybrid node type, the instance configuration request indicates to deploy the target instance on the hybrid node. When the target node type is the non-hybrid node type, the instance configuration request indicates to deploy the target instance on the non-hybrid node. Information carried in the instance configuration request is the instance parameter of the target instance.

502: The resource scheduling system receives the instance configuration request.

The instance configuration request is an instance configuration request sent by the tenant through the client. If the instance configuration request indicates to deploy the target instance on the hybrid node, the following step 503 and step 504 are performed.

503: The resource scheduling system determines a first hybrid node from the plurality of hybrid nodes based on the instance configuration request.

The first hybrid node is a hybrid node on which the target instance is to be deployed, the first hybrid node is a target node of the target instance, and the first hybrid node meets a resource quantity requirement of the target specification information of the target instance.

In a possible implementation, after receiving the instance configuration request, the resource scheduling system parses out the identifier of the target runtime type, the identifier of the target node type, the identifier of the target adjustment mode, the target specification information, and the instance priority information from the instance configuration request. If the target node type is the hybrid node type, the resource scheduling system determines the first hybrid node from the plurality of hybrid nodes based on the target specification information. The target specification information includes a target resource quantity of at least one resource, and the at least one resource includes at least one of a computing resource and a network resource. A target resource quantity of any resource is a resource quantity needed by the target instance for the resource.

For example, the resource scheduling system monitors a quantity of idle resources of at least one resource of each hybrid node and a quantity of idle resources of at least one resource of each non-hybrid node, and a quantity of idle resources of any resource of any node is a quantity of resources that are not allocated or that are not occupied in the node. For any one of the plurality of hybrid nodes, if a quantity of idle resources of at least one resource of the hybrid node is less than a target resource quantity of the corresponding resource, the hybrid node meets the resource quantity requirement of the target specification information, and the resource scheduling system determines the hybrid node as the first hybrid node.

If none of resources of the plurality of hybrid nodes meet the resource quantity requirement of the target specification information of the target instance, the resource scheduling system may configure a new hybrid node, where the new hybrid node meets the resource quantity requirement of the target specification information; and determine the new hybrid node as the first hybrid node. Alternatively, a created runtime instance is scheduled (or migrated) between the plurality of hybrid nodes, so that a hybrid node can meet the resource quantity requirement of the target specification information, and the hybrid node is determined as the first hybrid node. In a manner of scheduling a service instance, for example, if a sum of a quantity of resources occupied by at least one runtime instance on a hybrid node and a quantity of idle resources of the hybrid node is equal to or greater than a target resource quantity, the at least one runtime instance is scheduled to a third hybrid node, to release the quantity of resources occupied by the at least one runtime instance on the hybrid node, and the hybrid node is determined as the first hybrid node. The third hybrid node is any hybrid node other than the hybrid node in the plurality of hybrid nodes. There are one or more third hybrid nodes. For example, the at least one runtime instance is scheduled to one third hybrid node, and a quantity of idle resources of the third hybrid node meets a resource quantity requirement of the at least one runtime instance. For another example, there are a plurality of to-be-scheduled runtime instances on the hybrid node, each to-be-scheduled service instance is scheduled to a different third hybrid node, and a quantity of idle resources of each third hybrid node meets a resource quantity requirement of a service instance scheduled to the third hybrid node.

The first hybrid node is determined in a manner of scheduling the created runtime instance between the plurality of hybrid nodes, so that fragmented resources of the hybrid node are fully utilized.

504: The resource scheduling system creates the target instance for the tenant on the first hybrid node.

For example, the resource scheduling system creates a runtime instance of the target runtime type on the first hybrid node, and allocates a target quantity of resources of the first hybrid node to the runtime instance. The created runtime instance is the target instance, and a specification of the target instance is a specification required by the target specification information.

505: The resource scheduling system sends running status information of the target instance to the client, where the running status information includes an identifier of the runtime type and node information that are of the target instance, and the node information indicates that a runtime environment of the target instance is the first hybrid node.

The node information includes an identifier of the first hybrid node and an identifier of a hybrid node type.

For example, after creating the target instance, the resource scheduling system runs the target instance on the first hybrid node, generates the running status information based on the runtime type (that is, the target runtime type) of the target instance, the first hybrid node, and the hybrid node type, and returns the running status information to the client.

506: The client receives and displays the running status information.

The tenant may learn, based on the running status information, that the target instance has been established, and the target instance runs on the first hybrid node. The resource scheduling system may further send a remote login account and password and the running status information of the target instance together to the client, and the client displays the remote login account and password of the target instance, so that the tenant logs in to the target instance based on the remote login account and password of the target instance, and runs the target service of the tenant on the target instance.

In another possible implementation, if the instance configuration request indicates to deploy the target instance on the non-hybrid node, the resource scheduling system determines a first non-hybrid node from a plurality of non-hybrid nodes that support the target runtime type, and creates the target instance on the first non-hybrid node. The first non-hybrid node meets the resource quantity requirement of the target specification information. In this implementation, the first non-hybrid node is a target node of the target instance. A manner of determining the first non-hybrid node is similar to a manner of determining the first hybrid node. A process of creating the target instance on the first non-hybrid node is similar to a process of creating the target instance on the first hybrid node. After creating the target instance, the resource scheduling system also sends running status information of the target instance to the client. However, in this case, node information in the running status information indicates that a runtime environment of the target instance is the first non-hybrid node. Correspondingly, in this case, the node information includes an identifier of the first non-hybrid node and an identifier of a non-hybrid node type.

A runtime instance created for the tenant on each node (for example, a non-hybrid node or a hybrid node) managed by the resource scheduling system is referred to as a service instance. In another possible implementation, a process of creating the service instance on the node may be performed by an intelligent scheduling system in the resource scheduling system. The intelligent scheduling system is equivalent to a control apparatus in the resource scheduling system. As shown in FIG. 6, the intelligent scheduling system creates a new service instance on a node of a specific node type based on an instance configuration request of each tenant for each service instance, and manages and controls a lifecycle of the service instance through a native API supported by a runtime type of the service instance. The native API is a cloud management platform that manages a runtime instance. For example, if the service instance is a VM, the native API is OpenStack. If the service instance is a container, the native API is Kubernetes. Based on this, as shown in FIG. 6, OpenStack can perform lifecycle management and control on VMs in the virtual machine node and the hybrid node, and Kubernetes can perform lifecycle management and control on containers in the container node and the hybrid node.

In another possible implementation, the steps in the foregoing step 503 to step 505 may be performed by the control apparatus or a scheduling apparatus in the resource scheduling system, or may be performed by the control apparatus and the scheduling apparatus in cooperation. For example, the control apparatus performs step 502 and step 503, to determine the first hybrid node, and notify the scheduling apparatus to create the target instance on the first hybrid node, and the scheduling apparatus performs step 504 and step 505 based on the notification, or the scheduling apparatus performs step 504 based on the notification, and the control apparatus performs step 506.

In the method provided in this embodiment of this application, the resource scheduling system manages the resources of the plurality of hybrid nodes. Because the hybrid node supports deployment of a plurality of types of runtime instances, the resource scheduling system can deploy different types of runtime instances on the hybrid node. Specifications of different types of runtime instances differ greatly, and fragmented resources of the hybrid node can be allocated to a runtime instance with a small specification, so that the fragmented resources of the hybrid node can be fully utilized.

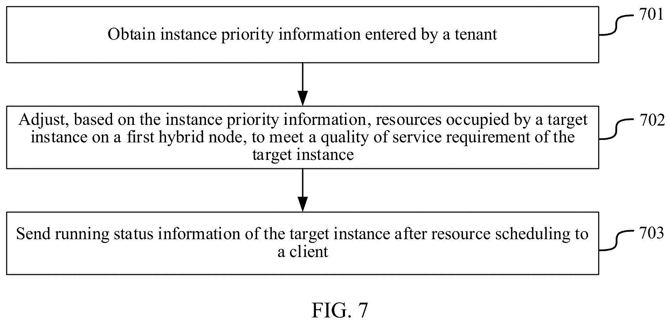

For runtime instances created in each non-hybrid node and each hybrid node that are managed by the resource scheduling system, quality of service requirements of different runtime instances may be the same or may be different. For any created runtime instance, the resource scheduling system may further adjust, based on instance priority information of the runtime instance, resources currently occupied by the runtime instance, so that adjusted resources can meet a quality of service requirement of the runtime instance, to ensure quality of service of the runtime instance. The following uses the target instance established on the first hybrid node as an example to describe a process of adjusting, by using a procedure of a resource scheduling method that is based on a cloud computing technology and that is shown in FIG. 7, resources occupied by the target instance. The method is performed by the foregoing resource scheduling system, for example, is performed by the scheduling apparatus in the resource scheduling system. The method includes the following steps.

701: The resource scheduling system obtains instance priority information entered by a tenant, where the instance priority information is used to determine quality of service required by the target instance on the first hybrid node.

The instance priority information includes a service priority (referred to as a target priority) of the target instance. The instance priority information that is of the target instance and that is entered by the tenant is instance priority information entered by the tenant through a client, and the instance priority information is included in an instance configuration request of the target instance. Based on this, the resource scheduling system obtains the instance priority information from the instance configuration request of the target instance.

702: The resource scheduling system adjusts, based on the instance priority information, resources occupied by the target instance on the first hybrid node, to meet the quality of service requirement of the target instance.

In a possible implementation, the resource scheduling system detects quality of service of the target instance, and determines, based on a detection result and the instance priority information, a resource adjustment policy for the resources occupied by the target instance, for example, a process shown in the following step 7021 to step 7024.

Step 7021: The resource scheduling system determines a quality of service degradation parameter of the target instance based on kernel indicator data of a processor core bound to the target instance.

A quality of service degradation parameter of any runtime instance indicates a quality of service degradation degree of the runtime instance in a running process. A processor core bound to any runtime instance is a processor core that provides a computing service for the runtime instance, in other words, a processor core that runs the runtime instance. Kernel indicator data of any processor core includes at least one of the following of the processor core: a service clock, a quantity of context switches, a quantity of processor core migrations, a quantity of page faults, clock cycles, a quantity of instructions per clock cycle, a quantity of stalled cycles per instruction, a quantity of branch predictions, a quantity of branch prediction failures, a quantity of times of reading from a level 1 cache, a quantity of times of failing to read from the level 1 cache, a quantity of times of reading from a last level cache, and a quantity of times of failing to read from the last level cache.

In a possible implementation, step 7021 is performed by a scheduling policy generation module of the resource scheduling system. The scheduling policy generation module is equivalent to the scheduling apparatus in the resource scheduling system. As shown in FIG. 6, the scheduling policy generation module collects information such as resource utilization, a busy degree, and an affinity degree of each node managed by the resource scheduling system. The busy degree indicates a busy degree of the node, and the affinity degree is an affinity degree between the node and a local service instance. The scheduling policy generation module constructs a unified resource view of the resource scheduling system based on collected information such as the resource utilization, the busy degree, and the affinity degree of each node, and kernel indicator data of each processor core in each node. For example, the scheduling policy generation module determines a quality of service degradation parameter of each service instance based on the kernel indicator data of each processor core, and constructs a unified resource view of the resource scheduling system based on information such as the quality of service degradation parameter of each service instance and the resource utilization, the busy degree, and the affinity degree of each node.

For example, each cloud management platform actively collects kernel load performance of a CPU of a node of the cloud management platform when the CPU runs a service, and reports information such as the resource utilization, the busy degree, and the affinity degree of each node, and the kernel indicator data of each processor core in each node to the scheduling policy generation module through a host layer interface in a platform access apparatus accessed by the cloud management platform. Alternatively, each cloud management platform does not actively report the information, and the scheduling policy generation module actively obtains the information from each cloud management platform through the platform access apparatus.

The processor core bound to the target instance is referred to as a first CPU. Determining the quality of service degradation parameter of the target instance is used as an example. In a process in which the target instance runs a target service, the scheduling policy generation module collects kernel indicator data of the first CPU in real time, and determines the quality of service degradation parameter of the target instance based on kernel indicator data of the first CPU at a current moment and kernel indicator data of the first CPU at a historical moment. A larger quality of service degradation parameter indicates a more severe quality of service degradation situation of the target instance, and a smaller quality of service degradation parameter indicates a less severe quality of service degradation situation of the target instance.

Because the kernel indicator data is a kernel-level indicator of the CPU, and can accurately reflect a kernel-level resource consumed by a runtime instance on the CPU, a quality of service degradation situation of the target instance can be accurately predicted based on the kernel indicator data of the first CPU. In this way, when the quality of service degradation is severe, resource scheduling is performed on the target instance in a timely manner, to alleviate the quality of service degradation situation of the target instance as soon as possible. In a process in which a service instance runs a service, consumption statuses of kernel-level resources of a bound processor core are different. For example, in a running process of a service, there are a large quantity of context switches; and in a running process of a service, there are a large quantity of times of reading from a level 1 cache. Based on this, a manner of determining a quality of service degradation situation of the service instance based on a plurality of types of kernel load performance of a processor in a service clock, a quantity of context switches, a quantity of processor migrations, a quantity of page faults, clock cycles, a quantity of instructions per clock cycle, a quantity of stalled cycles per instruction, a quantity of branch predictions, a quantity of branch prediction failures, a quantity of times of reading from a level 1 cache, a quantity of times of failing to read from the level 1 cache, a quantity of times of reading from a last level cache, and a quantity of times of failing to read from the last level cache is applicable to various services, to meet requirements of different services.

Step 7022: The resource scheduling system determines, based on correspondences between a plurality of priorities and quality of service levels and a target priority in the instance priority information, the quality of service required by the target instance on the first hybrid node.

The quality of service required by the target instance is quality of service required by the target service that is run in the target instance, and the target service is a service that is run by the tenant in the target instance. For example, a target quality of service level corresponding to the target priority is determined as the quality of service required by the target instance.

Step 7023: The resource scheduling system determines the resource adjustment policy of the target instance based on the target quality of service level, the quality of service degradation parameter of the target instance, and a quantity of resources needed for the target service, where the resource adjustment policy can meet the quality of service requirement of the target instance.

A node status of any node includes at least one of a resource status and a service status of the node. The resource status indicates at least one of a resource allocation status and a resource utilization status of the node. The resource allocation status includes a quantity of idle resources of the node and a quantity of resources occupied by each service instance on the node. The resource utilization status includes resource utilization of various resources of the node. The service status indicates at least one of a busy degree of the node and an affinity degree between the node and the local service instance. For example, the service status includes the busy degree of the node and an affinity degree between the node and each local service instance.

The resource adjustment policy includes any one of the following first adjustment policy to third adjustment policy. The first adjustment policy is releasing a first quantity of resources from the resources occupied by the target instance. A second adjustment policy is allocating a second quantity of resources to the target instance from unoccupied resources of the first hybrid node. The third adjustment policy is allocating a third quantity of resources to the target instance from unoccupied resources of a second hybrid node in a plurality of hybrid nodes.

In a possible implementation, if a current quality of service level of the target instance is lower than the target service level, and the quality of service degradation parameter of the target instance is greater than or equal to a parameter threshold, the resource scheduling system determines that the target instance does not meet the quality of service requirement of the target service. The current quality of service level of the target instance is determined based on the currently collected kernel indicator data of the first CPU. In another possible implementation, in the process in which the target instance runs the target service, quality of service provided by the target instance is always higher than or equal to the target service level. In this period, if the quality of service degradation parameter of the target instance is greater than the parameter threshold, the resource scheduling system determines that the target instance does not meet the quality of service requirement of the target service. The parameter threshold may be different in different implementation scenarios. The parameter threshold is not limited herein in this application.

When the target instance cannot meet the quality of service requirement of the target service, if the target instance further supports a flexible adjustment mode, and the target instance meets a resource adjustment condition, the resource scheduling system determines the resource adjustment policy of the target instance based on a node status of a first node and the quantity of resources needed for the target service. The following describes a process of determining the resource adjustment policy.

There is at least one resource needed for the target service, and any needed resource quantity is a predicted resource quantity of a resource that needs to be consumed by the target instance to run the target service. Determining a resource quantity of any resource needed for the target service is used as an example. The resource scheduling system collects, from the first hybrid node, a quantity of resources consumed by the target instance at each moment in the target service running process, periodically collects statistics on a change of the resource consumption of the target instance in the target service running process based on a time window, determines, based on a change that is of the resource consumption of the target instance and on which statistics collection is performed in a current time window, a quantity of resources needed for the target service in a next time window, and uses the quantity of resources needed for the target service in the next time window as the resource quantity of the resource needed for the target service.

The target service is used as a service $i$, and any resource of the target instance is represented as $X$. According to the following formula (1), the resource scheduling system obtains a mean $Mean(X)$ of quantities of resources consumed by the target instance in the current time window, obtains a standard deviation $Std(X)$ of the quantities of resources consumed by the target instance in the current time window, and uses a sum of the mean $Mean(X)$ and the standard deviation $Std(X)$ as a resource quantity $Usage(i,X)$ of the resource $X$ needed for the service $i$ in the next time window. The formula (1) is as follows:

$$Usage(i,X) = Mean(X) + Std(X)$$

$$Mean(X) = \frac{1}{t2 - t1} \sum\nolimits_{t1}^{t2} X(i)$$

$$Std(X) = \sqrt{\frac{1}{t2 - t1} \sum\nolimits_{t1}^{t2} X(i)}$$

$t1$ and $t2$ are respectively a start moment and an end moment of the current time window, and $X(i)$ is a resource quantity of the resource $X$ consumed by the target instance at a moment in a running process of the service $i$.

After the quantity of resources needed for the target service is obtained, if the quantity of resources needed for the target service is less than a quantity of the resources occupied by the target instance, it indicates that there are some idle resources in the resources occupied by the target instance. In this case, the resource scheduling system determines the first quantity based on the quantity of the resources occupied by the target instance and the quantity of resources needed for the target service. The first quantity is a quantity of to-be-released resources, and the first quantity is less than or equal to a difference between the quantity of the resources occupied by the target instance and the quantity of resources needed for the target service. The quantity of the resources occupied by the target instance is a resource quantity in current specification information of the target instance. For example, if no resource adjustment is performed after the target instance is created, a target resource quantity in target specification information of the target instance is the quantity of the resources occupied by the target instance. If resource adjustment is performed after the target instance is created, target specification information of the target instance is updated, a target resource quantity of the target instance is also updated correspondingly, and an updated target resource quantity is the quantity of the resources occupied by the target instance. Alternatively, if the quantity of resources needed for the target service is less than a quantity of the resources occupied by the target instance, the resource scheduling system uses a quantity of idle resources of the target instance as the first quantity. After determining the first quantity, the resource scheduling system determines the resource adjustment policy of the target instance as the first resource adjustment policy.

If the quantity of resources needed for the target service is greater than a quantity of the resources occupied by the target instance, it indicates that the resources occupied by the target instance cannot meet the resource requirement of the target service. In this case, the resource adjustment policy needs to be determined to increase the quantity of the resources occupied by the target instance, so as to increase a specification of the target instance to meet the resource requirement of the target service.

For example, if the quantity of resources needed for the target service is greater than the quantity of the resources occupied by the target instance, the resource scheduling system determines the second quantity based on the quantity of resources needed for the target service and the quantity of the resources occupied by the target instance. The second quantity is a quantity of resources additionally needed for the target service on a basis of the quantity of the resources occupied by the target instance, and the second quantity is greater than or equal to a difference between the quantity of the resources occupied by the target instance and the quantity of resources needed for the target service. A memory resource is used as an example. A quantity of memory resources needed for the target service is 100M, a quantity of memory resources occupied by the target instance is 80M, and the second quantity is at least 20M.

The resource scheduling system determines whether the second quantity of resources can be scheduled for the target instance from the resources of the first hybrid node, and if the second quantity of resources can be scheduled for the target instance from the resources of the first hybrid node, determines the resource adjustment policy of the target instance as the second resource adjustment policy. For example, the resource scheduling system obtains a quantity of idle resources of the first hybrid node. If the quantity of idle resources of the first hybrid node is greater than or equal to the second quantity, the second quantity of resources can be scheduled for the target instance from the resources of the first hybrid node. The resource scheduling system determines the resource adjustment policy of the target instance as the second resource adjustment policy. If the quantity of idle resources of the first hybrid node is less than the second quantity, the resource scheduling system queries whether a service instance (referred to as a first service instance) having an idle resource exists in the first hybrid node, and if the first service instance exists, releases the idle resource of the first service instance, so that the idle resource of the first hybrid node increases. Alternatively, the resource scheduling system schedules a second service instance on the first hybrid node to a third hybrid node, and releases a resource occupied by the second service instance on the first hybrid node, so that the idle resource of the first hybrid node increases. The second service instance is any service instance other than the target instance on the first hybrid node, and the third hybrid node is any hybrid node other than the first hybrid node in a plurality of hybrid nodes. Alternatively, the resource scheduling system releases an idle resource of a first service instance, schedules a second service instance on the first hybrid node to a third hybrid node, and releases a resource occupied by the second service instance on the first hybrid node, so that the idle resource of the first hybrid node increases. After the idle resource of the first hybrid node increases, the quantity of idle resources of the first hybrid node is updated. If an updated quantity of idle resources of the first hybrid node is greater than or equal to the second quantity, the second quantity of resources can be scheduled for the target instance from the resources of the first hybrid node. In this case, the resource scheduling system determines the resource adjustment policy of the target instance as the second resource adjustment policy.

In another possible implementation, if the second quantity of resources can be scheduled for the target instance from the resources of the first hybrid node, the resource scheduling system may further determine, based on the node status of the first hybrid node, whether to determine the resource adjustment policy of the target instance as the second resource adjustment policy. For example, if resource utilization of the first hybrid node is less than or equal to a utilization threshold, and/or a busy degree of the first hybrid node is less than or equal to a first busy degree threshold, it indicates that the resource utilization of the first hybrid node is low, and/or the first hybrid node is in a non-busy state, and the first hybrid node has sufficient resources. In this case, the resource adjustment policy of the target instance is determined as the second resource adjustment policy. If resource utilization of the first hybrid node is greater than a utilization threshold, and/or a busy degree of the first hybrid node is greater than a first busy degree threshold, it indicates that the resource utilization of the first hybrid node is high, and/or the first hybrid node is in a busy state, and the first hybrid node has insufficient resources. To avoid affecting running of another service instance on the first hybrid node, the resource adjustment policy of the target instance is determined as the third resource adjustment policy.

In another possible implementation, if the second quantity of resources cannot be scheduled for the target instance from the resources of the first hybrid node, the resource scheduling system determines the resource adjustment policy of the target instance as the third resource adjustment policy. A process of determining the third resource policy is described below by using the following step A1 and step A2 as an example.

Step A1: In a process in which the target instance runs the target service of the tenant, the resource scheduling system obtains node statuses of the plurality of hybrid nodes and a quality of service degradation parameter of each service instance running on each hybrid node, where the quality of service degradation parameter indicates a quality of service degradation degree of the service instance in a running process.

For any hybrid node, a process in which the resource scheduling system obtains a node status of the hybrid node is similar to a process in which the resource scheduling system obtains the status of the first hybrid node, and a process in which the resource scheduling system obtains a quality of service degradation parameter of each service instance running on the hybrid node is similar to a process in which the resource scheduling system obtains the quality of service degradation parameter of the target instance. Details are not described herein again in step A1.

Step A2: The resource scheduling system determines the third resource adjustment policy of the target instance based on the node statuses of the plurality of hybrid nodes, the quality of service degradation parameter of each service instance, and an actual quantity of resources consumed by each service instance, where the third resource adjustment policy includes allocating the third quantity of resources to the target instance from the unoccupied resources of the second hybrid node in the plurality of hybrid nodes.

The third quantity is a quantity of resources needed for the target service. In the plurality of hybrid nodes, the second hybrid node has sufficient resources and the third quantity of resources can be allocated from the second hybrid node to the target instance.

Any hybrid node other than the first hybrid node in the plurality of hybrid nodes is used as an example. The resource scheduling system determines, based on a node status of the hybrid node, whether the hybrid node has sufficient resources. A determining manner is similar to a manner of determining whether the first hybrid node has sufficient resources. Details are not described again. If the hybrid node has the sufficient resources and a quantity of idle resources is greater than the third quantity, the resource scheduling system determines the hybrid node as the second hybrid node, to avoid affecting running of another service instance on the second hybrid node after the resource is allocated to the target instance from the second hybrid node subsequently. Alternatively, if the hybrid node has the sufficient resources, quality of service degradation parameters of all service instances on the hybrid node are less than or equal to a second parameter threshold, and a quantity of idle resources of the hybrid node is greater than the third quantity, the resource scheduling system determines the hybrid node as the second hybrid node, to avoid affecting quality of service of another service instance on the second hybrid node after the resource is allocated to the target instance from the second hybrid node subsequently.

If the hybrid node has the sufficient resources, but a quantity of idle resources of the hybrid node is less than the third quantity, the resource scheduling system may further determine a quantity of idle resources of each service instance on the hybrid node based on an actual quantity of resources consumed by each service instance and a quantity of resources occupied by each service instance, or obtain the quantity of idle resources of each service instance from the hybrid node. An actual quantity of resources consumed by any service instance is a quantity of resources consumed by the service instance in a process in which the service instance runs a service, and idle consumption of the service instance is a quantity of unused resources in a quantity of resources occupied by the service instance. For example, the idle consumption of the service instance is equal to a difference between the quantity of resources occupied by the service instance and the actual quantity of resources consumed by the service instance. Based on the quantity of idle resources of each service instance on the hybrid node, an idle resource of at least one service instance on the hybrid node is released, and a quantity of resources released from the at least one service instance is less than a quantity of idle resources of the service instance, to increase the idle resource of the hybrid node; at least one service instance is scheduled to a fourth hybrid node, and a resource occupied by the at least one service instance on the hybrid node is released, to increase the idle resource of the hybrid node; or an idle resource of at least one service instance on the hybrid node is released, and another at least one service instance on the hybrid node is scheduled to a fourth hybrid node, to increase the idle resource of the hybrid node. The fourth hybrid node is any hybrid node other than the first hybrid node in the plurality of hybrid nodes. The idle resource of the hybrid node is increased, so that the quantity of idle resources of the hybrid node is updated. If an updated quantity of idle resources of the hybrid node is greater than or equal to the third quantity, the resource scheduling system determines the hybrid node as the second hybrid node.

In another possible implementation, the resource scheduling system first determines whether a quantity of idle resources of each hybrid node is greater than or equal to the third quantity. If a hybrid node whose quantity of idle resources is greater than or equal to the third quantity exists, the resource scheduling system determines, based on a node status of the hybrid node, whether the hybrid node has sufficient resources, and if the hybrid node has the sufficient resources, determines the hybrid node as the second hybrid node. Alternatively, if a hybrid node whose quantity of idle resources is greater than the third quantity exists, the resource scheduling system determines the hybrid node as the second hybrid node. In this case, a node status of the hybrid node is not concerned. If a hybrid node whose quantity of idle resources is greater than the third quantity does not exist in the plurality of hybrid nodes, an idle resource of a service instance on a hybrid node is released and/or some service instances on the hybrid node are scheduled to another hybrid node, so that a quantity of idle resources of the hybrid node can be greater than or equal to the third quantity, and the hybrid node is determined as the second hybrid node.

The foregoing manners of determining the second hybrid node may be randomly combined, to extend another manner of determining the second hybrid node, provided that a second hybrid node whose quantity of idle resources is greater than or equal to the third quantity and on which occupying a third quantity of idle resources does not affect quality of service of a local service instance can be found from the plurality of hybrid nodes. The manner of determining the second hybrid node is not limited herein in this embodiment of this application.

After determining the second hybrid node, the resource scheduling system generates a second resource scheduling policy of the target instance based on the second hybrid node and the third quantity.

The foregoing is described by using an example in which the second resource scheduling policy is determined for the target instance based on a node status of another hybrid node, a quality of service degradation parameter of a service instance on the another hybrid node, and actual resource consumption when the first hybrid node cannot allocate sufficient resources to the target instance. In another possible implementation, the resource scheduling system determines a target hybrid node from the plurality of hybrid nodes based on the node statuses of the plurality of hybrid nodes, the quality of service degradation parameter of each service instance, and the actual quantity of resources consumed by each service instance, where a quantity of idle resources of the target hybrid node is sufficient to allocate a target quantity of resources to the target instance; and generates a resource adjustment policy of the target instance based on the target hybrid node and the target quantity. In this way, the resource adjustment policy of the target instance is determined based on the node statuses of the plurality of hybrid nodes, the quality of service degradation parameter of each service instance, and the actual quantity of resources consumed by each service instance. In this possible implementation, if the target hybrid node is the first hybrid node, the target quantity is the first quantity or the second quantity; or if the target hybrid node is the second hybrid node, the target quantity is the third quantity. A process of determining the target hybrid node is similar to a process of determining the second hybrid node. Details are not described herein again.

For ease of understanding a principle of determining the resource adjustment policy, the foregoing is described by using an example in which the idle resource of the target hybrid node is increased by releasing an idle resource of a service instance on the target hybrid node (the first hybrid node or the second hybrid node) and/or scheduling the service instance to another node before the resource adjustment policy is determined. In some other embodiments, in a process of determining the resource adjustment policy, the idle resource of the target hybrid node is not adjusted. Instead, an idle resource adjustment subpolicy is generated based on a service instance that is in the target hybrid node and from which an idle resource is to be released and/or a service instance that is to be scheduled from the target hybrid node, and the resource adjustment policy of the target instance is generated based on the idle resource adjustment subpolicy, the target hybrid node, and the target quantity. In this case, the resource adjustment policy further includes the idle resource adjustment subpolicy. The idle resource adjustment subpolicy indicates to release an idle resource of at least one service instance on the target hybrid node and/or schedule the at least one service instance from the target hybrid node.

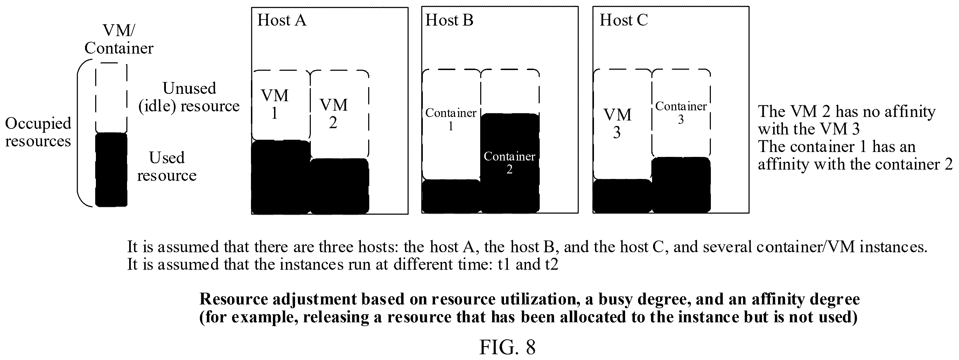

A diagram of a resource scheduling policy shown in FIG. 8 is used as an example to describe the foregoing process of determining the adjustment policy. It is assumed that a host A is a VM node (that is, a non-hybrid node) that supports only deployment of a VM, a host B is a container node (that is, a non-hybrid node) that supports only deployment of a container, and a host C is a hybrid node. It is assumed that service instances on the host A, the host B, and the host C run services in two different time periods: t1 and t2 separately. Specification information of the host A, the host B, and the host C, specification information of each service instance in the specification information of the hosts A to C, and quantities of resources needed by each service instance in the time periods: t1 and t2 are shown in Table 1 below. The host A has high resource utilization and a low busy degree. Specifically, the host A is busy in the time period t1 and is idle in the time period t2. The host B has high resource utilization and a low busy degree. Specifically, the host B is idle in the time period t1 and is busy in the time period t2. The host C has low resource utilization and a high busy degree. Specifically, the host C is idle in the time period t1 and is busy in the time period t2.

Table 1

| Specification information of a host | Specification information of a service instance | Quantity of resources needed in the time period t1 | Quantity of resources needed in the time period t2 | Resource utilization of the host | | Busy degree of the host |
|---|---|---|---|---|---|---|
| | | | | CPU utilization | Memory utilization | |
| Host A: 16U32G | VM 1: 8U16G | 8U16G | 0 | 100% | 75% | 50% |
| | VM 2: 8U8G | 8U8G | 0 | | | |
| Host B: 8U16G | Container 1: 4U8G | 0 | 4U8G | 100% | 75% | 50% |
| | Container 2: 4U4G | 0 | 4U4G | | | |
| Host C: 32U32G | VM 3: 8U8G | 0 | 8U8G | 25% | 25% | 100% |
| | Container 3: 8U8G | 8U8G | 0 | | | |

It is assumed that the container 3 is a target container. In the time period t1, a quantity of resources needed by the container 3 reaches a resource quantity recorded in specification information of the container 3. If quality of service of the container 3 is severely degraded, the resource scheduling system may formulate a resource scheduling policy for the container 3 based on parameters such as resource utilization and a busy degree of each hybrid node, and a quantity of resources needed by another service instance in the host C in the time period t1. For example, the resource scheduling policy is to release a resource that is occupied by the VM 3 but is not used in the time period t1 (that is, an idle resource of the VM 3).

Step 7024: The resource scheduling system adjusts, according to the resource adjustment policy in resources provided by the plurality of hybrid nodes, the resources occupied by the target instance.

When the resource adjustment policy is the first resource adjustment policy, the resource scheduling system releases the first quantity of resources from the resources occupied by the target instance on the first hybrid node, so that the released resources become idle resources of the first hybrid node, to increase the quantity of idle resources of the first hybrid node.

When the resource adjustment policy is the second resource adjustment policy, if the second resource adjustment policy includes an idle resource adjustment subpolicy, according to the idle resource adjustment subpolicy, the resource scheduling system releases an idle resource of a service instance other than the target instance on the first hybrid node and/or schedules the service instance to another hybrid node, to increase the quantity of idle resources of the first hybrid node; and allocates the second quantity of resources to the target service instance from the unoccupied resources of the first hybrid node, to increase the quantity of resources occupied by the target instance. If the second resource adjustment policy does not include an idle resource adjustment policy, the resource scheduling system allocates the second quantity of resources to the target service instance from the unoccupied resources of the first hybrid node.

When the resource adjustment policy is the third resource adjustment policy, if the third resource adjustment policy includes an idle resource adjustment subpolicy, according to the idle resource adjustment subpolicy, the resource scheduling system releases an idle resource of at least one service instance on the third hybrid node and/or schedules the at least one service instance to another hybrid node, to increase a quantity of idle resources of the second hybrid node; and schedules the target instance from the first hybrid node to the second hybrid node, and allocates the third quantity of resources to the target instance from the unoccupied resources of the second hybrid node, to increase the quantity of resources occupied by the target instance. If the third resource adjustment policy does not include an idle resource adjustment subpolicy, the resource scheduling system schedules the target instance from the first hybrid node to the second hybrid node, and allocates the third quantity of resources to the target instance from the unoccupied resources of the second hybrid node.

For any service instance, if a resource occupied by the service instance is released or a new resource is allocated to the service instance, a quantity of resources occupied by the service instance is updated. The resource scheduling system updates a resource quantity in specification information of the service instance to the quantity of resources occupied by the service instance, that is, a specification of the service instance is updated. For any service instance, if the service instance is scheduled from one node (referred to as a source node) to another node (referred to as a target node), the resource scheduling system releases a resource occupied by the service instance on the source node, to increase a quantity of idle resources of the source node, and allocates a resource to the service instance from unused resources (that is, idle resources) of the target node, to reduce a quantity of the idle resources of the target node. When the service instance is scheduled from the source node to the target node, sufficient resources are allocated to the service instance from the resources of the target node, to ensure quality of service of the service instance. As shown in FIG. 6, some service instances in a host 1 and a host 2 are scheduled to a host K. In this case, quality of service-ensured instance scheduling needs to be performed.

In another possible implementation, the foregoing process shown in step 7021 to step 7024 may be implemented through interaction between a plurality of modules in the resource scheduling system. As shown in FIG. 6, the scheduling policy generation module performs the foregoing steps 7021 to 7023, to determine the resource adjustment policy of the target instance, and sends the resource adjustment policy to an intelligent scheduling system. The intelligent scheduling system performs step 704 according to the resource adjustment policy, to adjust the resources occupied by the target instance. For example, the intelligent scheduling system delivers the resource adjustment policy to a native API supported by a runtime type of the target instance, and the native API adjusts, according to the resource adjustment policy, the resources occupied by the target instance.

After the resource adjustment is performed on the target instance, running status information of the target instance is correspondingly updated. As shown in FIG. 6, updated running status information includes an identifier of a node on which the target instance is located, an identifier of a node type of the node on which the target instance is located, recommended specification information, and degradation information. The recommended specification information is information about a runtime specification that is recommended to the tenant and that can meet the quality of service requirement of the target service. The recommended specification information may be specification information of the target instance after the resource adjustment. The degradation information indicates whether the quality of service (QoS) degradation parameter of the target instance exceeds a first parameter threshold. The degradation information is classified into first degradation information and second degradation information. The first degradation information indicates that the quality of service degradation parameter of the target instance exceeds the first parameter threshold.

The second degradation information indicates that the quality of service degradation parameter of the target instance does not exceed the first parameter threshold.

At least one of the recommended specification information and the degradation information is an option of the running status information. Based on this, the resource scheduling system updates the running status information of the target instance based on degradation information of the target service and/or the recommended specification information. For example, after the resource adjustment is performed on the target instance, the resource scheduling system uses latest specification information of the target instance after the resource adjustment as the recommended specification information, and obtains a current quality of service degradation parameter when the target instance runs the target service. If the quality of service degradation parameter is greater than or equal to the first parameter threshold, the running status information is generated based on the first degradation information and/or the recommended specification information. If the quality of service degradation parameter is less than the first parameter threshold, the running status information is generated based on the second degradation information and/or the recommended specification information. After the running status information is generated, the resource scheduling system performs the following step 703 to provide the running status information of the target instance after resource scheduling for the client.

703: The resource scheduling system sends the running status information of the target instance after the resource scheduling to the client.

As shown in FIG. 6, the resource scheduling system sends the running status information of the target instance after the resource scheduling to the client, to update a running status of the target instance on the client. The client receives and displays updated running status information, so that the tenant obtains a current running status of the target instance.

The foregoing uses an example in which the target instance supports the flexible adjustment mode, to describe a process of adjusting the resources occupied by the target instance. In another possible implementation, the target instance supports an elastic adjustment mode, but does not support the flexible adjustment mode. The resource scheduling system may determine a resource adjustment policy for the target instance based on the foregoing manner, predict a resource quantity obtained by adjusting the resources occupied by the target instance according to the resource adjustment policy, use the predicted resource quantity as recommended specification information of the target instance, generate running status information of the target instance based on the recommended specification information of the target instance, and send the running status information to the client. The client receives and displays the running status information, so that the tenant updates (that is, adjusts) at least one of specification information, a supported resource adjustment mode, and instance priority information of the target instance based on the recommended specification information. Certainly, when the target instance supports the flexible adjustment mode, the tenant may update the at least one item based on current running status information of the target instance. If the tenant updates the at least one item through the client, in a running process of the target instance, the resource scheduling system performs, based on updated at least one item, secondary adjustment on the resources occupied by the target service instance, for example, re-performs, based on the updated at least one item, the procedure shown in FIG. 7 on the target instance, to meet requirements of the target instance in different time periods. An adjustment manner is, for example, to adjust the at least one item through an instance configuration page shown in FIG. 6, to trigger secondary configuration of the target instance.

In the embodiment shown in FIG. 7, the resources occupied by the target instance on the hybrid node are adjusted based on the instance priority information entered by the tenant, so that adjusted resources occupied by the target instance can meet the quality of service requirement of the target instance, to ensure quality of service of a service that is run in the target instance. In addition, the resources occupied by the target instance are adjusted according to different resource adjustment policies, so that idle fragmented resources of the hybrid node can be integrated, thereby fully utilizing the fragmented resources of the hybrid node.

In FIG. 7, an example in which the target instance is a service instance on the hybrid node is used to describe a process of adjusting resources occupied by the service instance on the hybrid node. In another possible implementation, for a plurality of non-hybrid nodes on which a same runtime instance is deployed, resources provided by the plurality of non-hybrid nodes are used as a resource pool. The resource scheduling system may adjust, in the resources provided by the plurality of non-hybrid nodes in the resource adjustment manner described above, resources occupied by service instances on the plurality of non-hybrid nodes. Details are not described herein again.

In another possible implementation, for any service instance on each node (including a hybrid node or a non-hybrid node) managed by the resource adjustment system, based on an affinity degree between the service instance and a node on which the service instance is located, resource adjustment is performed, between nodes of different node types or between nodes of a same node type, on resources occupied by the service instance. The target instance is still used as an example. If an affinity degree between the target instance and the first hybrid node is greater than a first affinity threshold, the target instance does not support being scheduled from the first hybrid node, and the resource scheduling system customizes the first resource adjustment policy or the second resource adjustment policy for the target instance, to ensure that the target instance is not scheduled from the first hybrid node. If an affinity degree between the target instance and the first hybrid node is greater than or equal to a second affinity threshold and is less than or equal to a first affinity threshold, the target instance supports, in resources provided by a node that has a same node type as a node on which the target instance is located, adjustment of the resources occupied by the target service instance. For example, the target instance supports, in resources provided by a plurality of hybrid nodes, adjustment of the resources occupied by the target service instance. If an affinity degree between the target instance and the first hybrid node is less than a second affinity threshold, the target instance supports being scheduled to a node that supports deployment of a target instance type, and the node is a non-hybrid node or a hybrid node. In this way, the resource scheduling system may adjust, in resources provided by a plurality of nodes that support deployment of the target instance type, the resources occupied by the target service instance.

The container 3 in FIG. 8 is still used as the target instance. If an affinity degree between the container 3 and the host C is greater than the first affinity threshold, resources occupied by the container 3 can be adjusted only in resources provided by the host C. If an affinity degree between the container 3 and the host C is greater than or equal to the second affinity threshold and less than or equal to the first affinity threshold, resources occupied by the container 3 may be adjusted in resources provided by the host C and another hybrid node. If an affinity degree between the container 3 and the host C is less than the second affinity threshold, resources occupied by the container 3 may be adjusted in resources provided by the host C and the host B. The affinity degree of the target instance may be configured by the tenant through the client, or may be determined by the resource scheduling system based on priority information of the target instance.

An affinity degree between service instances of a same node is higher than an affinity degree between service instances of different nodes. As shown in FIG. 8, an affinity degree between the VM 2 and the VM 3 is low, the VM 2 has no affinity with the VM 3, and the container 1 has an affinity with the container 2.

For any service instance on each node (including a hybrid node or a non-hybrid node) managed by the resource adjustment system, the resource scheduling system provides running status information of the service instance in different time periods for the client, so that the tenant updates (that is, adjusts) at least one of specification information, a supported resource adjustment mode, and instance priority information of the service instance based on current running status information of the service instance. Subsequently, in a running process of the service instance, the resource scheduling system performs, based on updated at least one item, secondary adjustment on resources occupied by the service instance. For a process of the secondary adjustment, refer to the embodiment shown in FIG. 7. Details are not described herein again.

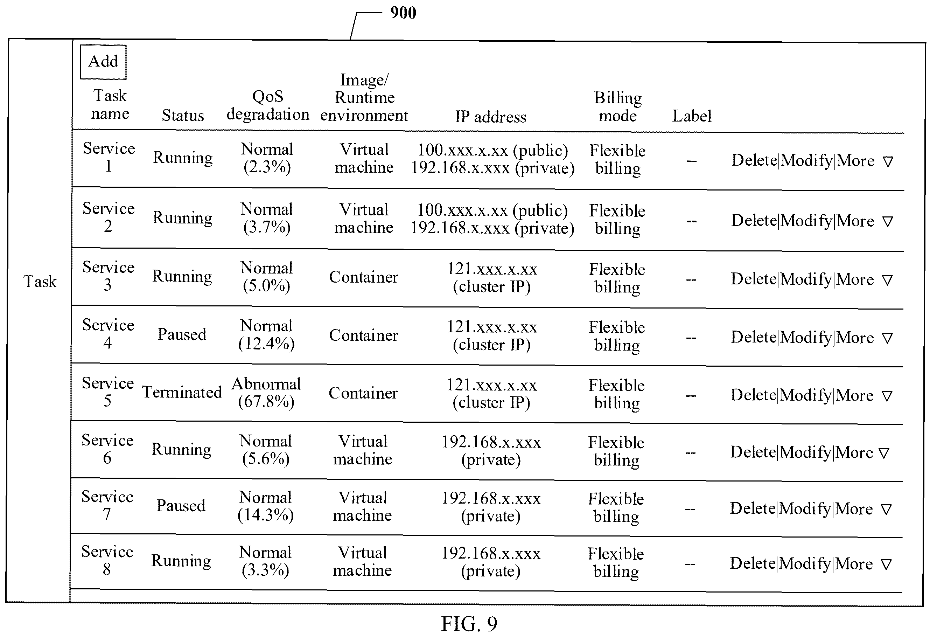

In some other embodiments, the resource scheduling system described above is further configured to provide a service display page. FIG. 9 is a diagram of a service display page according to an embodiment of this application. The service display page is used to display related statuses of all services managed by the resource scheduling system and related statuses of all runtime instances. The service display page may also be understood as a global resource display page of the resource scheduling system. The resource scheduling system further provides an external interface for accessing the service display page. The user (a tenant user or an administrator) invokes the interface through the client, to display the service display page on the client.

As shown in FIG. 9, the service display page 900 is used to display at least one of a running status of each service in runtime instances of a plurality of cloud management platforms, a quality of service degradation situation of the service, an image/runtime instance used by a runtime instance of the service, an IP address of the runtime instance of the service, a label of the runtime instance of the service, and a billing mode corresponding to a resource adjustment mode of the service.

For example, for any service, the service display page is further used to display a name of the service, to indicate the service. A running status of the service includes a running state, a paused state, or a terminated state. The paused state means that a runtime instance of the service does not run temporarily, and the paused state is referred to as a suspended state. The terminated state means that the runtime instance of the service has stopped running the service. The running status is a service status of the runtime instance of the service for the service.

A quality of service degradation situation of any service is a normal situation or an abnormal situation. The normal situation indicates that a quality of service degradation degree is still within an allowed range of the service. The abnormal situation indicates that a quality of service degradation degree exceeds the allowed range of the service. For example, the service display page displays a quality of service degradation parameter, to indicate the quality of service degradation degree. When the quality of service degradation degree exceeds the allowed range of the service, a control device may further display the quality of service degradation parameter through the service display page, and give an alarm prompt, to help the user perform processing as soon as possible. In a possible implementation, the service display page is further used to display a quality of service evaluation indicator that is used to determine the quality of service degradation parameter of the service. Because the quality of service evaluation indicator includes kernel-level indicators such as an IPC and an SC, the quality of service degradation situation is more comprehensively displayed, so that a system performance status can be more accurately reflected, to help the user find and resolve a problem in a timely manner. This ensures stability and reliability of the resource scheduling system.

The label of the runtime instance is used to record location information and/or other information of the runtime instance. The location information indicates a node on which the runtime instance is located and a cloud management platform to which the node belongs. The label of the runtime instance is displayed, so that the user can more conveniently classify and manage the runtime instance. The image/runtime instance used by the runtime instance is displayed, to help the user learn about a software version running in the resource scheduling system. The IP address of the runtime instance is displayed, so that the user can directly access the runtime instance. The billing mode is displayed, so that the user can learn about a resource usage status and a billing status of the resource scheduling system. The label of the runtime instance that runs the service is displayed, so that the user can more conveniently classify and manage the runtime instance. Related information of the runtime instance is displayed in detail, so that the user or the administrator can more conveniently manage and optimize the system, to improve work efficiency and an optimization capability.

For example, the service display page further displays operation options such as a start option, a stop option, and a restart option for the runtime instance of the service, to perform a remote operation on the runtime instance.

Based on the information displayed on the service display page, the user can clearly learn about a status and a running status of the entire resource scheduling system and make necessary adjustment in a timely manner, so that the resource scheduling system can work more efficiently, thereby meeting service requirements in different application scenarios.

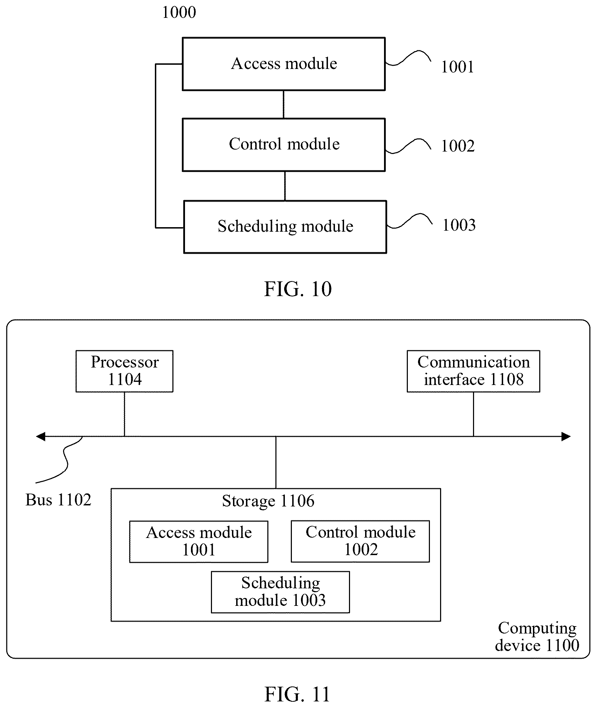

The method in embodiments of this application is described above. An apparatus in embodiments of this application is described below. It should be understood that the apparatus described below has any function of any apparatus in the task scheduling system in the foregoing method. Based on a same inventive concept as the foregoing task scheduling method for providing a cloud service, the following describes an apparatus and a device in a resource scheduling system with reference to FIG. 10 to FIG. 13. It should be understood that the technical features described in the method embodiments are also applicable to the following apparatus embodiment.

FIG. 10 is a diagram of a structure of an apparatus for hybrid deployment across runtime instances based on a cloud computing technology according to an embodiment of this application. The apparatus 1000 shown in FIG. 10 includes:

an access module 1001, configured to receive an instance configuration request sent by a tenant through a client, where the instance configuration request indicates to deploy a target instance on a hybrid node, and a runtime type of the target instance is a type of the runtime instance;
a control module 1002, configured to determine a first hybrid node from a plurality of hybrid nodes based on the instance configuration request; and
a scheduling module 1003, configured to create the target instance for the tenant on the first hybrid node.

The access module 1001 is configured to send running status information of the target instance to the client, where the running status information includes an identifier of the runtime type and node information that are of the target instance, and the node information indicates that a runtime environment of the target instance is the first hybrid node.

In a possible implementation, the access module 1001 is further configured to obtain instance priority information entered by the tenant, where the instance priority information is used to determine quality of service required by the target instance on the first hybrid node.

The scheduling module 1003 is further configured to adjust, based on the instance priority information, resources occupied by the target instance on the first hybrid node, to meet the quality of service requirement of the target instance.

In a possible implementation, the apparatus 1000 supports the tenant in updating the instance priority information based on running status information after the resource adjustment, and the scheduling module 1003 is further configured to:
adjust, based on updated instance priority information, resources occupied by the target service instance.

In a possible implementation, the scheduling module 1003 in the apparatus is further configured to:

in a process in which the target instance runs a target service of the tenant, obtain node statuses of the plurality of hybrid nodes and a quality of service degradation parameter of each service instance running on each hybrid node, where the quality of service degradation parameter indicates a quality of service degradation degree of the service instance in a running process, and a runtime type of the service instance is a type of the runtime instance;
determine a resource adjustment policy of the target instance based on the node statuses of the plurality of hybrid nodes, the quality of service degradation parameter of each service instance, and an actual quantity of resources consumed by each service instance, where the resource adjustment policy is capable of meeting the quality of service requirement of the target instance; and
adjust, according to the resource adjustment policy in resources provided by the plurality of hybrid nodes, the resources occupied by the target instance.

In a possible implementation, the node status includes a resource status and a service status of the hybrid node, the resource status indicates at least one of a resource allocation status and a resource utilization status of the hybrid node, and the service status indicates at least one of a busy degree of the hybrid node and an affinity degree between the hybrid node and a local service instance.

In a possible implementation, the resource adjustment policy includes any one of the following:

releasing a first quantity of resources from the resources occupied by the target instance;
allocating a second quantity of resources to the target instance from unoccupied resources of the first hybrid node; and
allocating a third quantity of resources to the target instance from unoccupied resources of a second hybrid node in the plurality of hybrid nodes.

In a possible implementation, the resource adjustment policy includes recommended specification information, and the recommended specification information is information about a runtime specification that is recommended to the tenant and that is capable of meeting a quality of service requirement of the target service. The apparatus 1000 further includes the following.

The control module 1002 is further configured to update the running status information based on a quality of service degradation parameter of the target service and/or the recommended specification information.

The access module 1001 is further configured to send updated running status information to the client.

In a possible implementation, the scheduling module 1003 is further configured to:
determine the quality of service degradation parameter of the service instance based on kernel indicator data of a processor core bound to the service instance.

The access module 1001 is equivalent to the platform access apparatus 11 in FIG. 1, the control module 1002 is equivalent to the control apparatus 12 in FIG. 1, and the scheduling module 1003 is equivalent to the scheduling apparatus 13 in FIG. 1. In some other embodiments, the control module 1002 and the scheduling module 1003 may be integrated into one module, configured to implement functions of the control apparatus 12 and the scheduling apparatus 13 in FIG. 1. In some other embodiments, the access module 1001 and the control module 1033 may be integrated into one module, configured to implement functions of the platform access apparatus 11 and the control apparatus 12 in FIG. 1.

Each module in the apparatus 1000 may be implemented by using software, or may be implemented by using hardware. For example, the following uses the scheduling module 1003 as an example to describe an implementation of the scheduling module 1003. Similarly, for each module in the apparatus 1000, refer to the implementation of the scheduling module 1003.

A module is used as an example of a software functional unit, and the scheduling module 1003 may include code run on a computing instance. The computing instance may include at least one of a physical host (computing device), a virtual machine, and a container. Further, there may be one or more computing instances. For example, the scheduling module 1003 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is disposed in one region. A communication gateway needs to be disposed in each VPC for communication between two VPCs in a same region and cross-region communication between VPCs in different regions. The VPCs are interconnected through the communication gateway.

A module is used as an example of a hardware functional unit, and the scheduling module 1003 may include at least one computing device, for example, a server. Alternatively, the scheduling module 1003 may be a device implemented by using an application-specific integrated circuit (application-specific integrated circuit, ASIC) or a programmable logic device (programmable logic device, PLD), or the like. The PLD may be implemented by using a complex programmable logical device (complex programmable logical device, CPLD), a field-programmable gate array (field-programmable gate array, FPGA), generic array logic (generic array logic, GAL), or any combination thereof.

A plurality of computing devices included in the scheduling module 1003 may be distributed in a same region, or may be distributed in different regions. The plurality of computing devices included in the scheduling module 1003 may be distributed in a same AZ, or may be distributed in different AZs. Similarly, the plurality of computing devices included in the scheduling module 1003 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in another embodiment, the scheduling module 1003 may be configured to perform any step in the method for hybrid deployment across runtime instances based on a cloud computing technology, the control module 1002 may be configured to perform any step in the method for hybrid deployment across runtime instances based on a cloud computing technology, and steps implemented by the access module 1001, the control module 1002, and the scheduling module 1003 may be specified as needed. The access module 1001, the control module 1002, and the scheduling module 1003 respectively implement different steps in the method for hybrid deployment across runtime instances based on a cloud computing technology, to implement all functions of a resource scheduling system that is based on the cloud computing technology.

This application further provides a computing device. FIG. 11 is a diagram of a structure of a computing device according to an embodiment of this application. The computing device 1100 includes a bus 1102, a processor 1104, a storage 1106, and a communication interface 1108. The processor 1104, the storage 1106, and the communication interface 1108 communicate with each other through the bus 1102 The computing device 1100 may be a server or a terminal device. It should be understood that quantities of processors and storages in the computing device 1100 are not limited in this application.

The bus 1102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 11. However, it does not indicate that there is only one bus or only one type of bus. The bus 1102 may include a path for transferring information between components (for example, the storage 1106, the processor 1104, and the communication interface 1108) of the computing device 1100.

The processor 1104 may include any one or more of processors such as a central processing unit (central processing unit, CPU), a graphics processing unit (graphics processing unit, GPU), a micro processor (micro processor, MP), and a digital signal processor (digital signal processor, DSP).

The storage 1106 may include a volatile memory (volatile memory), for example, a random access memory (random access memory, RAM). The processor 1104 may further include a non-volatile memory (non-volatile memory), for example, a read-only memory (read-only memory, ROM), a flash memory, a hard disk drive (hard disk drive, HDD), or a solid-state drive (solid-state drive, SSD).

The storage 1106 stores executable program code, and the processor 1104 executes the executable program code to separately implement functions of the foregoing provided method for hybrid deployment across runtime instances based on a cloud computing technology, so as to implement the foregoing provided method for hybrid deployment across runtime instances based on a cloud computing technology. In other words, the storage 1106 stores instructions for performing the method for hybrid deployment across runtime instances based on a cloud computing technology.

Alternatively, the storage 1106 stores executable code, and the processor 1104 executes the executable code to separately implement the foregoing provided apparatus for hybrid deployment across runtime instances based on a cloud computing technology, so as to implement the foregoing provided method and apparatus method for hybrid deployment across runtime instances based on a cloud computing technology. In other words, the storage 1106 stores instructions for performing the method for hybrid deployment across runtime instances based on a cloud computing technology.

The communication interface 1108 uses a transceiver module, for example, but not limited to, a network interface card or a transceiver, to implement communication between the computing device 1100 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device like a desktop computer, a notebook computer, or a smartphone.

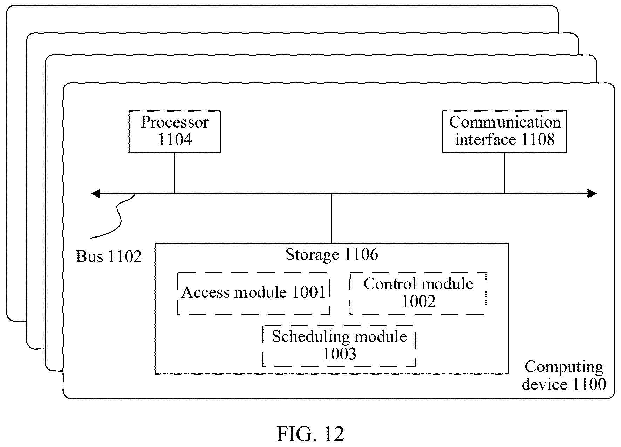

FIG. 12 is a diagram of an architecture of a computing cluster according to an embodiment of this application. The computing device cluster includes at least one computing device 1100. Storages 1106 in the one or more computing devices 1100 in the computing device cluster may store same instructions for performing the method for hybrid deployment across runtime instances based on a cloud computing technology.

In some possible implementations, alternatively, the storages 1106 in the one or more computing devices 1100 in the computing device cluster may separately store a part of instructions for performing the method for hybrid deployment across runtime instances based on a cloud computing technology. In other words, a combination of the one or more computing devices 1100 may jointly execute the instructions for performing the method for hybrid deployment across runtime instances based on a cloud computing technology.

It should be noted that storages 1106 in different computing devices 1100 in the computing device cluster may store different instructions for separately implementing a part of functions of the access module 1001, the control module 1002, and the scheduling module 1003. In other words, the instructions stored in the storages 1106 in the different computing devices 1100 may be used to implement functions of one or more of the access module 1001, the control module 1002, and the scheduling module 1003.

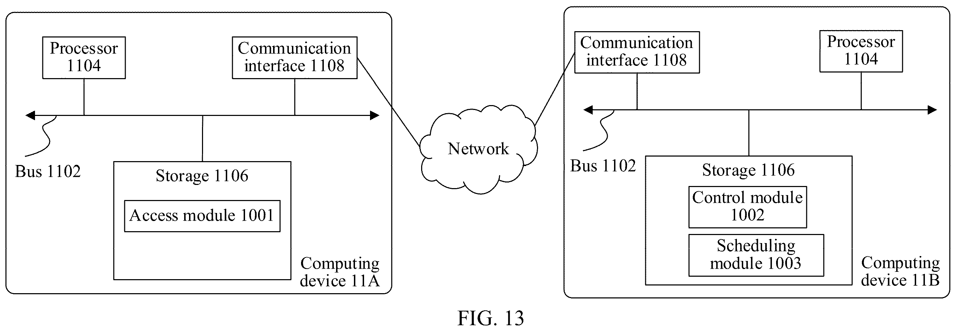

In some possible implementations, the one or more computing devices in the computing device cluster may be connected through a network. The network may be a wide area network, a local area network, or the like. For example, FIG. 13 is a diagram of an architecture of another computing cluster according to an embodiment of this application. As shown in FIG. 13, two computing devices 11A and 11B are connected through a network. Specifically, each computing device is connected to the network through a communication interface in the computing device. In this type of possible implementation, a storage 1106 in the computing device 11A stores instructions for performing a function of the access module 1001. In addition, a storage 1106 in the computing device 11B stores instructions for performing functions of the scheduling module 1003 and the control module 1002.

The connection manner in the computing device cluster shown in FIG. 13 may be used in consideration of a need (for example, scheduling a plurality of tasks simultaneously) of the method that is for hybrid deployment across runtime instances based on a cloud computing technology and that is provided in this application. Therefore, the functions implemented by the scheduling module 1003 and the control module 1002 are considered to be performed by the computing device 11B.

It should be understood that functions of the computing device 11A shown in FIG. 13 may alternatively be completed by a plurality of computing devices 1100. Similarly, functions of the computing device 11B may alternatively be completed by a plurality of computing devices 1100.

An embodiment of this application further provides another computing device cluster. For a connection relationship between computing devices in the computing device cluster, refer to the connection manner in the computing device cluster in FIG. 12 and FIG. 13. A difference is that storages 1106 in one or more computing devices 1100 in the computing device cluster may store same instructions for performing the method performed by the access module 1001 and the control module 1002.

In some possible implementations, alternatively, the storages 1106 in the one or more computing devices 1100 in the computing device cluster may separately store a part of instructions for performing the method for hybrid deployment across runtime instances based on a cloud computing technology. In other words, a combination of the one or more computing devices 1100 may jointly execute the instructions for performing the method for hybrid deployment across runtime instances based on a cloud computing technology.

An embodiment of this application further provides a computer program product including instructions. The computer program product may be software or a program product that includes the instructions and that can run on a computing device or can be stored in any usable medium. When the computer program product runs on at least one computing device, the at least one computing device is enabled to perform the method for hybrid deployment across runtime instances based on a cloud computing technology.

An embodiment of this application further provides a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct a computing device to perform the method for hybrid deployment across runtime instances based on a cloud computing technology.

It should be noted that information (including but not limited to user equipment information, user personal information, and the like), data (including but not limited to data for analysis, data for storage, data for display, and the like), and signals in this application are all authorized by users or fully authorized by all parties, and collection, use, and processing of related data need to comply with related laws, regulations, and standards of related countries and regions. For example, all SMS message sending requests in this application are obtained under full authorization.

The foregoing embodiments are merely intended to describe the technical solutions of this application, but not to limit this application. Although this application is described in detail with reference to the foregoing embodiments, persons of ordinary skill in the art should understand that they may still make modifications to the technical solutions recorded in the foregoing embodiments or make equivalent replacements to some technical features thereof. Such modifications or replacements do not make essence of the corresponding technical solutions depart from the protection scope of the technical solutions of embodiments of the present invention.

## Claims

1. A method for hybrid deployment across runtime instances based on a cloud computing technology, wherein the method is performed by a resource scheduling system that is based on the cloud computing technology, the resource scheduling system is configured to manage resources of a plurality of hybrid nodes, the hybrid node is a node supporting at least two types of runtime instances, the types of the runtime instances comprise a container, a virtual machine, and a serverless function, and the method comprises:

   receiving an instance configuration request sent by a tenant through a client, wherein the instance configuration request indicates to deploy a target instance on the hybrid node, and a runtime type of the target instance is a type of the runtime instance;
   determining a first hybrid node from the plurality of hybrid nodes based on the instance configuration request;
   creating the target instance for the tenant on the first hybrid node; and
   sending running status information of the target instance to the client, wherein the running status information comprises an identifier of the runtime type and node information that are of the target instance, and the node information indicates that a runtime environment of the target instance is the first hybrid node.

2. The method according to claim 1, wherein after the creating the target instance for the tenant on the first hybrid node, the method further comprises:

obtaining instance priority information entered by the tenant, wherein the instance priority information is used to determine quality of service required by the target instance on the first hybrid node; and
adjusting, based on the instance priority information, resources occupied by the target instance on the first hybrid node, to meet the quality of service requirement of the target instance.

3. The method according to claim 2, wherein the resource scheduling system supports the tenant in updating the instance priority information based on the running status information after the resource adjustment, and the method further comprises:
adjusting, based on updated instance priority information, resources occupied by the target service instance.

4. The method according to claim 2 or 3, wherein the method further comprises:

in a process in which the target instance runs a target service of the tenant, obtaining node statuses of the plurality of hybrid nodes and a quality of service degradation parameter of each service instance running on each hybrid node, wherein the quality of service degradation parameter indicates a quality of service degradation degree of the service instance in a running process, and a runtime type of the service instance is a type of the runtime instance;
determining a resource adjustment policy of the target instance based on the node statuses of the plurality of hybrid nodes, the quality of service degradation parameter of each service instance, and an actual quantity of resources consumed by each service instance, wherein the resource adjustment policy is capable of meeting the quality of service requirement of the target instance; and
adjusting, according to the resource adjustment policy in the resources provided by the plurality of hybrid nodes, the resources occupied by the target instance.

5. The method according to claim 4, wherein the node status comprises a resource status and a service status of the hybrid node, the resource status indicates at least one of a resource allocation status and a resource utilization status of the hybrid node, and the service status indicates at least one of a busy degree of the hybrid node and an affinity degree between the hybrid node and a local service instance.

6. The method according to claim 4 or 5, wherein the resource adjustment policy comprises any one of the following:

releasing a first quantity of resources from the resources occupied by the target instance;
allocating a second quantity of resources to the target instance from unoccupied resources of the first hybrid node; and
allocating a third quantity of resources to the target instance from unoccupied resources of a second hybrid node in the plurality of hybrid nodes.

7. The method according to any one of claims 4 to 6, wherein the resource adjustment policy comprises recommended specification information, the recommended specification information is information about a runtime specification that is recommended to the tenant and that is capable of meeting a quality of service requirement of the target service, and the method further comprises:

updating the running status information based on a quality of service degradation parameter of the target service and/or the recommended specification information; and
sending updated running status information to the client.

8. The method according to any one of claims 4 to 7, wherein obtaining the quality of service degradation parameter of each service instance running on each hybrid node comprises:
determining the quality of service degradation parameter of the service instance based on kernel indicator data of a processor core bound to the service instance.

9. An apparatus for hybrid deployment across runtime instances based on a cloud computing technology, wherein the apparatus is configured to manage resources of a plurality of hybrid nodes, the hybrid node is a node supporting at least two types of runtime instances, the types of the runtime instances comprise a container, a virtual machine, and a serverless function, and the apparatus comprises:

an access module, configured to receive an instance configuration request sent by a tenant through a client, wherein the instance configuration request indicates to deploy a target instance on the hybrid node, and a runtime type of the target instance is a type of the runtime instance;
a control module, configured to determine a first hybrid node from the plurality of hybrid nodes based on the instance configuration request; and
a scheduling module, configured to create the target instance for the tenant on the first hybrid node, wherein the access module is further configured to send running status information of the target instance to the client, wherein the running status information comprises an identifier of the runtime type and node information that are of the target instance, and the node information indicates that a runtime environment of the target instance is the first hybrid node.

**10.** The apparatus according to claim 8, wherein

the access module is further configured to obtain instance priority information entered by the tenant, wherein the instance priority information is used to determine quality of service required by the target instance on the first hybrid node; and
the scheduling module is further configured to adjust, based on the instance priority information, resources occupied by the target instance on the first hybrid node, to meet the quality of service requirement of the target instance.

**11.** The apparatus according to claim 9, wherein the apparatus supports the tenant in updating the instance priority information based on the running status information after the resource adjustment, and the scheduling module is further configured to:
adjust, based on updated instance priority information, resources occupied by the target service instance.

**12.** The apparatus according to claim 9 or 11, wherein the scheduling module is further configured to:

in a process in which the target instance runs a target service of the tenant, obtain node statuses of the plurality of hybrid nodes and a quality of service degradation parameter of each service instance running on each hybrid node, wherein the quality of service degradation parameter indicates a quality of service degradation degree of the service instance in a running process, and a runtime type of the service instance is a type of the runtime instance;
determine a resource adjustment policy of the target instance based on the node statuses of the plurality of hybrid nodes, the quality of service degradation parameter of each service instance, and an actual quantity of resources consumed by each service instance, wherein the resource adjustment policy is capable of meeting the quality of service requirement of the target instance; and
adjust, according to the resource adjustment policy in the resources provided by the plurality of hybrid nodes, the resources occupied by the target instance.

**13.** The apparatus according to claim 12, wherein the node status comprises a resource status and a service status of the hybrid node, the resource status indicates at least one of a resource allocation status and a resource utilization status of the hybrid node, and the service status indicates at least one of a busy degree of the hybrid node and an affinity degree between the hybrid node and a local service instance.

**14.** The apparatus according to claim 12 or 13, wherein the resource adjustment policy comprises any one of the following:

releasing a first quantity of resources from the resources occupied by the target instance;
allocating a second quantity of resources to the target instance from unoccupied resources of the first hybrid node; and
allocating a third quantity of resources to the target instance from unoccupied resources of a second hybrid node in the plurality of hybrid nodes.

**15.** The apparatus according to claim 12 or 13, wherein the resource adjustment policy comprises recommended specification information, and the recommended specification information is information about a runtime specification that is recommended to the tenant and that is capable of meeting a quality of service requirement of the target service;

the control module is further configured to update the running status information based on a quality of service degradation parameter of the target service and/or the recommended specification information; and
the access module is further configured to send updated running status information to the client.

**16.** The apparatus according to any one of claims 12 to 15, wherein the scheduling module is further configured to: determine the quality of service degradation parameter of the service instance based on kernel indicator data of a processor core bound to the service instance.

**17.** A computing device cluster, comprising at least one computing device, wherein each computing device comprises a processor and a storage, and a processor of the at least one computing device is configured to execute instructions stored in a storage of the at least one computing device, to enable the computing device cluster to perform the method according to any one of claims 1 to 8.

**18.** A computer program product comprising instructions, wherein when the instructions are run by a computing device cluster, the computing device cluster is enabled to perform the method according to any one of claims 1 to 8.

**19.** A computer-readable storage medium, comprising computer program instructions, wherein when the computer program instructions are executed by a computing device cluster, the computing device cluster performs the method according to any one of claims 1 to 8.

Resource scheduling system 100
Storage control apparatus
14
Control apparatus
12
Scheduling apparatus
13
Platform access apparatus
11
IaaS
VaaS
OpenStack
21
CaaS
Kubernetes
21
FaaS
Serverless
21
22
Node 0
Virtual machine instance
Virtual machine
Virtual machine
22
Node 1
Container instance
Container
Container
22
Node 2
Function instance
Function
Function
22
Node 3
Virtual machine instance
Virtual machine
Virtual machine
22
Node 4
Container instance
Container
Container
22
Node 5
Function instance
Function
Function

FIG. 1

User 1
VM creation
OpenStack
API combination
VM creation
Nova API
Nova conductor
VM scheduling
Nova compute
VM creation or deletion
VM scheduling
VM-related information obtaining
libvirt
11
Platform access apparatus
Management layer VaaS
Host layer VaaS
Resource scheduling system 100
Lifecycle management
Task scheduling mode
Information storage
Control apparatus
Scheduling apparatus
Storage control apparatus
12
13
14
Management plane
Host side

FIG. 2

User 2
Container creation
Kubernetes
API server
Container creation
Pod API
ReplicationController API
Container scheduling
kubelet
metrics
Container creation
Container scheduling or deletion
Container-related information obtaining
11
Platform access apparatus
Management layer CaaS
Host layer CaaS
Resource scheduling system 100
Lifecycle management
Task scheduling mode
Information storage
Control apparatus
Scheduling apparatus
Storage control apparatus
12
13
14
Management plane
Host side

FIG. 3

Global resource
Virtual machine
Container
Linux process
Nova compute
kubelet
HPC/Hadoop agent
Cloud OS
CPU
Memory
External I/O device
File system

FIG. 4

Client
Resource scheduling system
501: Send an instance configuration request
502: Receive the instance configuration request
503: Determine a first hybrid node from a plurality of hybrid nodes based on the instance configuration request
504: Create a target instance for a tenant on the first hybrid node
505: Send running status information of the target instance
506: The client receives and displays the running status information

FIG. 5

Running status information:
Runtime type
Node type (VM, container, or hybrid)
Does QoS exceed a threshold? (Yes or No)
Recommended specification information
Flexible adjustment mode (specification)
Elastic adjustment mode (specification)
Is deployment on a hybrid node acceptable? (Yes or No)
Priority (high, medium, or low)
...
Instance configuration page (the tenant applies for and changes an instance)
Tenant
Send
Resource scheduling system
Intelligent scheduling system
Scheduling policy generation module
Information such as QoS, a busy degree, and utilization
Unified resource view
Security-first task
OpenStack API
Performance-first task
Kubernetes API
Hybrid task (near-end access)
OpenStack API
Kubernetes API
Host 1
VM 2
VM 1
VM 3
VM 4
VM 6
VM 6
VM 7
VM 8
Host 2
Container 1
Container 2
Container 3
Container 4
Container 5
Container 6
Container 7
Container 8
Container 9
QoS-ensured instance scheduling
Host K
Container 1
Container 2
Container 3
Container 4
Container 5
VM 1
VM 2
VM 3
VM 4
Monitoring QoS, utilization, and the like
Virtual machine node
Monitoring QoS, utilization, and the like
Container node
Monitoring QoS, utilization, and the like
Hybrid node

FIG. 6

Obtain instance priority information entered by a tenant
701
Adjust, based on the instance priority information, resources occupied by a target instance on a first hybrid node, to meet a quality of service requirement of the target instance
702
Send running status information of the target instance after resource scheduling to a client
703

FIG. 7

VM/
Container
Occupied
resources
Unused
(idle) resource
Used
resource
Host A
VM
1
VM
2
Host B
Container
1
Container
2
Host C
VM
3
Container
3
The VM 2 has no affinity
with the VM 3
The container 1 has an
affinity with the container 2
It is assumed that there are three hosts: the host A, the host B, and the host C, and several container/VM instances.
It is assumed that the instances run at different time: t1 and t2

**Resource adjustment based on resource utilization, a busy degree, and an affinity degree (for example, releasing a resource that has been allocated to the instance but is not used)**

FIG. 8

900

Task

Add

| Task name | Status | QoS degradation | Image/ Runtime environment | IP address | Billing mode | Label | |
|---|---|---|---|---|---|---|---|
| Service 1 | Running | Normal (2.3%) | Virtual machine | 100.xxx.x.xx (public) 192.168.x.xxx (private) | Flexible billing | -- | Delete\|Modify\|More ▽ |
| Service 2 | Running | Normal (3.7%) | Virtual machine | 100.xxx.x.xx (public) 192.168.x.xxx (private) | Flexible billing | -- | Delete\|Modify\|More ▽ |
| Service 3 | Running | Normal (5.0%) | Container | 121.xxx.x.xx (cluster IP) | Flexible billing | -- | Delete\|Modify\|More ▽ |
| Service 4 | Paused | Normal (12.4%) | Container | 121.xxx.x.xx (cluster IP) | Flexible billing | -- | Delete\|Modify\|More ▽ |
| Service 5 | Terminated | Abnormal (67.8%) | Container | 121.xxx.x.xx (cluster IP) | Flexible billing | -- | Delete\|Modify\|More ▽ |
| Service 6 | Running | Normal (5.6%) | Virtual machine | 192.168.x.xxx (private) | Flexible billing | -- | Delete\|Modify\|More ▽ |
| Service 7 | Paused | Normal (14.3%) | Virtual machine | 192.168.x.xxx (private) | Flexible billing | -- | Delete\|Modify\|More ▽ |
| Service 8 | Running | Normal (3.3%) | Virtual machine | 192.168.x.xxx (private) | Flexible billing | -- | Delete\|Modify\|More ▽ |

FIG. 9

1000
Access module
1001
Control module
1002
Scheduling module
1003

FIG. 10

Processor 1104
Communication interface 1108
Bus 1102
Storage 1106
Access module 1001
Control module 1002
Scheduling module 1003
Computing device 1100

FIG. 11

Processor 1104
Communication interface 1108
Bus 1102
Storage 1106
Access module 1001
Control module 1002
Scheduling module 1003
Computing device 1100

FIG. 12

Processor 1104
Communication interface 1108
Storage 1106
Control module 1002
Scheduling module 1003
Bus 1102
Computing device 11B
Network
Communication interface 1108
Processor 1104
Storage 1106
Access module 1001
Bus 1102
Computing device 11A

FIG. 13

**INTERNATIONAL SEARCH REPORT**

International application No. **PCT/CN2024/079353**

**A. CLASSIFICATION OF SUBJECT MATTER**

G06F9/50(2006.01)i

According to International Patent Classification (IPC) or to both national classification and IPC

**B. FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS, CNTXT, VEN, USTXT, CNKI, IEEE: 虚拟机, 容器, 无服务器函数, 部署, 节点, 混合, 资源, 实例, 服务质量, 调整, VM, virtual machine, container, function, arrange, node, mixed, resource, instance, QoS, adjust

**C. DOCUMENTS CONSIDERED TO BE RELEVANT**

| Category* | Citation of document, with indication, where appropriate, of the relevant passages | Relevant to claim No. |
|---|---|---|
| X | CN 113849260 A (HUAWEI TECHNOLOGIES CO., LTD.) 28 December 2021 (2021-12-28) description, paragraphs 42-87 and 124-131 | 1, 9, 17-19 |
| Y | CN 113849260 A (HUAWEI TECHNOLOGIES CO., LTD.) 28 December 2021 (2021-12-28) description, paragraphs 42-87 and 124-131 | 2-8, 10-16 |
| Y | CN 116431341 A (ZHEJIANG UNIVERSITY) 14 July 2023 (2023-07-14) claim 1, and description, paragraphs 38 and 69-85 | 2-8, 10-16 |
| A | CN 117130728 A (CHINA MERCHANTS BANK CO., LTD.) 28 November 2023 (2023-11-28) entire document | 1-19 |
| A | US 2022357995 A1 (ATEME) 10 November 2022 (2022-11-10) entire document | 1-19 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **08 May 2024** | **14 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/079353**

| Patent document cited in search report | Publication date (day/month/year) | Patent family member(s) | Publication date (day/month/year) |
|---|---|---|---|
| CN 113849260 A | 28 December 2021 | None | |
| CN 116431341 A | 14 July 2023 | None | |
| CN 117130728 A | 28 November 2023 | None | |
| US 2022357995 A1 | 10 November 2022 | EP 4086764 A1 | 09 November 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310952215
- CN 202311288295